(19) **Europäisches Patentamt**

**European Patent Office**

**Office européen des brevets**

(11) **EP 0 790 441 B1**

(12) **EUROPEAN PATENT SPECIFICATION**

(45) Date of publication and mention
of the grant of the patent:
**04.09.2002 Bulletin 2002/36**

(51) Int Cl.[7]: **F16H 61/06**
// F16H59/48

(21) Application number: **96109982.7**

(22) Date of filing: **20.06.1996**

(54) **Pressure regulation in a control system for automatic transmission**

Drückregelung für ein automatisches Getriebesteuerungssystem

Système de régulation de pression dans une boîte de vitesses automatique

(84) Designated Contracting States:
**DE GB**

(30) Priority: **31.08.1995 JP 22431295**

(43) Date of publication of application:
**20.08.1997 Bulletin 1997/34**

(73) Proprietor: **AISIN AW CO., LTD.**
**Anjo-shi Aichi-ken (JP)**

(72) Inventors:
- **Tsutsui, Hiroshi**
  **Anjo-shi, Aichi-ken,444-11 (JP)**
- **Tsukamoto, Kazumasa**
  **Anjo-shi, Aichi-ken,444-11 (JP)**
- **Hayabuchi, Masahiro**
  **Anjo-shi, Aichi-ken,444-11 (JP)**
- **Yamamoto, Yoshihisa**
  **Anjo-shi, Aichi-ken,444-11 (JP)**
- **Iwata, Akihito**
  **Anjo-shi, Aichi-ken,444-11 (JP)**

(74) Representative: **VOSSIUS & PARTNER**
**Siebertstrasse 4**
**81675 München (DE)**

(56) References cited:
EP-A- 0 436 978    US-A- 4 775 938
US-A- 4 898 049    US-A- 5 179 875
US-A- 5 272 630    US-A- 5 307 727

## Description

The present invention relates to a control system for an automatic transmission.

In the automatic transmission of the prior art, the rotation, as generated by the engine, is transmitted through a fluid transmission unit such as a torque converter to a speed change unit, in which its speed is changed. Between the fluid transmission unit and the speed change unit, moreover, there is arranged a first clutch (or input clutch) which can be applied/released to interchange a neutral range (as will be called the "N-range") and a forward running range.

In the automatic transmission, on the other hand, when the D-range is selected at the zero vehicle speed with the accelerator pedal being released but with the brake pedal being depressed, the neutral control is effected by lowering the oil pressure of the hydraulic servo to release the first clutch so that the load to be applied to the engine is reduced to improve the fuel economy and to prevent the vehicle from vibrating.

In the automatic transmission thus constructed, when the first clutch is to be applied, the output RPM of the torque converter is detected so that the application shock, as will occur according to the engagement of the first clutch, may be prevented by feeding the hydraulic servo of the first clutch with the oil pressure which is generated in a manner to correspond to the output RPM (as disclosed in JP-A-136055/1986).

In the automatic transmission of the prior art described above, however, the output RPM of the torque converter is detected, and the oil pressure is generated according to the detected output RPM so that proper engaging characteristics cannot be attained.

Generally speaking, when the RPM of a rotary member is to be detected, a plurality of projections, as formed on the rotor of the rotary member, are detected by an RPM detecting sensor so that the RPM is calculated in terms of the time period from the detection of a certain projection to the detection of a next one.

If the output RPM of the torque converter is to be detected by the RPM detecting sensor when the vehicle stands still as in the neutral control, the time period from the detection of one projection to the detection of the next one is elongated because of the relatively small output RPM, so that the time period, as required for calculating the output RPM, is accordingly elongated to delay the detection.

Thus, when the vehicle stops, the bad responsiveness disables the feedback control on real time. This makes it impossible to achieve the proper engaging characteristics.

It is, therefore, conceivable to correct and learn the oil pressure for applying the first clutch at the next time, if the RPM change rate of the output RPM, as detected, is different from a target RPM change rate.

However, this learning control is accompanied by the following problems.

Specifically, at the initial stage of engagement of the first clutch, the output RPM is not only made unstable because of the delay in the rise of the oil pressure to be fed to the hydraulic servo but also caused to fluctuate by the influences of factors other than the oil pressure.

While the output RPM is relatively small, moreover, it cannot be detected because the RPM detecting sensor has a detection limit.

Thus, not only the output RPM is caused to fluctuate by the various factors but also the output RPM cannot be detected, so that the accurate RPM change rate cannot be achieved to invite the erroneous learning.

US 5,272,630 which discloses the features of the preamble of claim 1, relates to an automatic transmission for an automotive vehicle having an automatic ratio control wherein provision is made for disengaging a forward-drive clutch which forms a part of the torque flow path from an engine to the torque input element of multiple-ratio gearing and for disengaging the forward-drive clutch when the vehicle is stopped and the vehicle engine is idling and wherein provision is made for engaging the clutch to condition the transmission for torque delivery. The engagement is controlled by an electronic microprocessor as part of a closed control loop, thereby minimizing inertia torque disturbances when the clutch is engaged upon the initiation of the vehicle acceleration mode from a standing start.

US 5,179,875 relates to a turbine speed controller for an automatic transmission. A control for a torque converter transmission is provided which has a pressure-operated torque input clutch that establishes and disestablishes a torque flow path between an engine and torque input elements of a multiple-ratio transmission comprising a solenoid-operated clutch control and an electronic controller and clutch control valve structure. By monitoring the clutch input speed and comparing it to an idealized speed throughout the engagement period, an error signal can be developed and a corrective change in the clutch pressure can be implemented. The engagement can be made self-adjusting.

The present invention contemplates to solve the aforementioned problems of the automatic transmission of the prior art and has an object to provide a control system for an automatic transmission, which can achieve an accurate RPM change rate and proper engaging characteristics without any erroneous learning.

Fig. 1 is a functional block diagram of a control system of an automatic transmission in a mode of embodiment of the present invention;

Fig. 2 is a schematic diagram of the automatic transmission in the mode of embodiment of the present invention;

Fig. 3 is a table enumerating the operations of the automatic transmission in the mode of embodiment of the present invention;

Fig. 4 is a first diagram showing a hydraulic control unit in the mode of embodiment of the present invention;

Fig. 5 is a second diagram showing a hydraulic control unit in the mode of embodiment of the present invention;

Fig. 6 is a flow chart of a neutral control routine in the mode of embodiment of the present invention;

Fig. 7 is a time chart of a control system for an automatic transmission in the mode of embodiment of the present invention;

Fig. 8 is a first flow chart of a first clutch release control routine in the mode of embodiment of the present invention;

Fig. 9 is a second flow chart of the first clutch release control routine in the mode of embodiment of the present invention;

Fig. 10 is a diagram of relations between an engine RPM, and an input torque and a throttle pressure in the mode of embodiment of the present invention;

Fig. 11 is a flow chart of a zero vehicle speed estimating routine in the mode of embodiment of the present invention;

Fig. 12 is a diagram for explaining the state of a clutch in the mode of embodiment of the present invention;

Fig. 13 is a time chart when the first clutch in the mode of embodiment of the present invention is in a drag region;

Fig. 14 is a time chart when the first clutch in the mode of embodiment of the present invention is in a slip region;

Fig. 15 is a first flow chart of an in-neutral control routine in the mode of embodiment of the present invention;

Fig. 16 is a second flow chart of an in-neutral control routine in the mode of embodiment of the present invention;

Fig. 17 is a flow chart of a threshold value updating routine in the mode of embodiment of the present invention;

Fig. 18 is a first flow chart of a first clutch application control sub-routine in the mode of embodiment of the present invention;

Fig. 19 is a second flow chart of a first clutch application control sub-routine in the mode of embodiment of the present invention;

Fig. 20 is a diagram of a relation between a throttle opening and a set value in the mode of embodiment of the present invention;

Fig. 21 is an explanatory diagram of the detection delay of the RPM sensor in the mode of embodiment of the present invention;

Fig. 22 is a time chart illustrating the number of oil pressure changes in the mode of embodiment of the present invention;

Fig. 23 is a first flow chart illustrating the engagement pressure learning control in the mode of embodiment of the present invention;

Fig. 24 is a second flow chart illustrating the engagement pressure learning control in the mode of embodiment of the present invention;

Fig. 25 is a time chart for explaining the section of the clutch input side RPM in the mode of embodiment of the present invention; and

Fig. 26 is a time chart for explaining the average change rate of the clutch input side RPM in the mode of embodiment of the present invention.

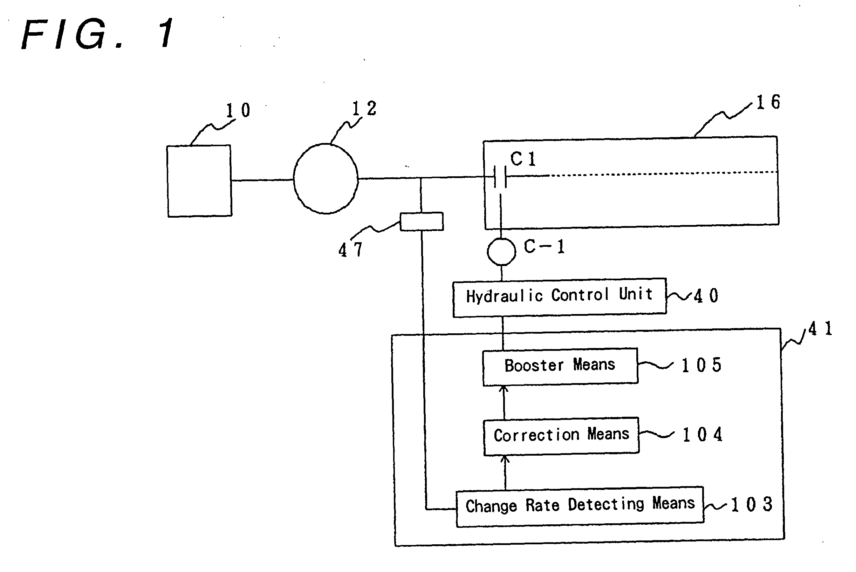

The present invention will be described in detail in the following in connection with its embodiment with reference to the accompanying drawings. Fig. 1 is a functional block diagram of a control system of an automatic transmission according to a mode of embodiment of the present invention.

In the drawing: reference numeral 10 designates an engine; numeral 12 a torque converter acting as a fluid transmission unit for transmitting the rotation of the engine 10 to a speed change unit 16; characters C1 a first clutch acting as a clutch to be applied, when a forward running range is selected, for transmitting the rotation from the torque converter 12 to the transmission mechanism of the speed change unit 16; characters C-1 a hydraulic servo for applying/releasing the first clutch C1; and numeral 40 a hydraulic control unit acting as oil pressure generating means for generating an oil pressure to be fed to the hydraulic servo C-1.

Moreover: reference numeral 41 designates an automatic transmission control unit acting as a control system; numeral 47 a RPM sensor acting as output RPM detecting means for detecting the output RPM of the torque converter 12; numeral 103 change rate detecting means for detecting the RPM change rate of the output RPM; numeral 104 correction means for correcting the preset characteristics; and numeral 105 booster means for raising the oil pressure according to the preset characteristics.

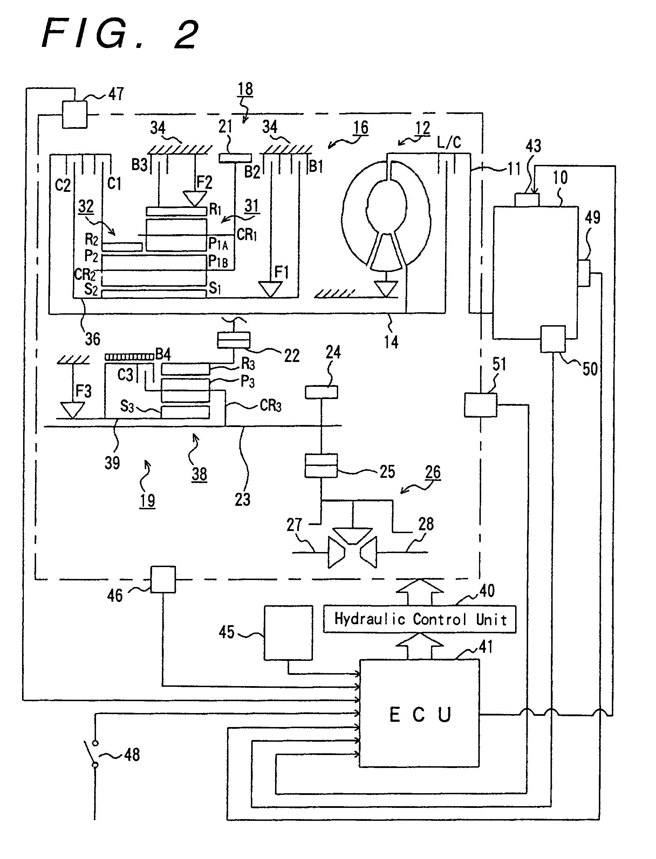

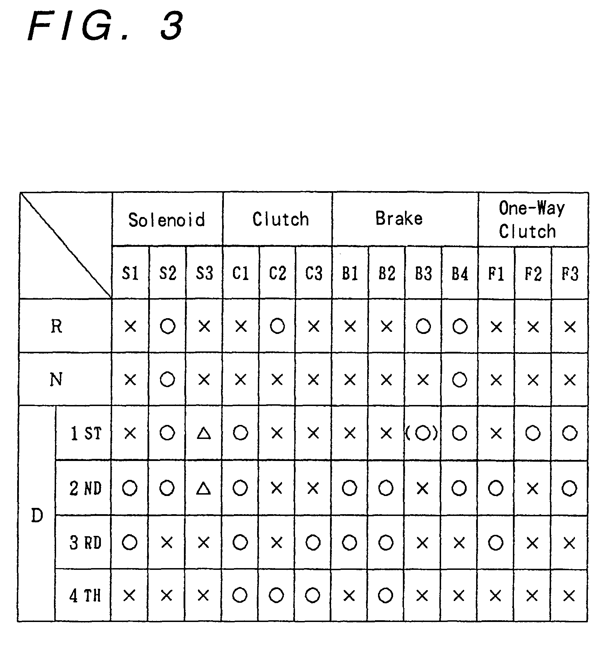

Fig. 2 is a schematic diagram of the automatic transmission in the mode of embodiment of the present invention, and Fig. 3 is a table enumerating the operations of the automatic transmission in the mode of embodiment of the present invention.

As shown, the rotation, as generated by the engine 10, is transmitted through an output shaft 11 to the torque converter 12. This torque converter 12 transmits the rotation of the engine 10 to an output shaft 14 through a fluid (or working oil) but is enabled to transmit the rotation directly to the output shaft 14, when the vehicle speed exceeds a predetermined value so that a lockup clutch L/C is applied.

To the output shaft 14, there is connected the speed change unit 16 for establishing four forward and one reverse speeds. This speed change unit 16 is constructed to include a main transmission 18 for three forward and one reverse speeds and an under-drive auxiliary transmission 19. Moreover, the rotation of the main transmission 18 is transmitted through a counter drive gear 21 and a counter driven gear 22 to the auxiliary transmission 19, and the rotation of the output shaft 23 of the auxiliary transmission 19 is transmitted through an output gear 24 and a ring gear 25 to a differential mechanism 26.

In this differential mechanism 26, the rotation, as transmitted through the output gear 24 and the ring gear 25, is differentiated so that the differential rotations are transmitted through lefthand and righthand drive shafts 27 and 28 to the not-shown drive wheels.

The main transmission 18 is equipped with a first planetary gear unit 31 and a second planetary gear unit 32 and further with the first clutch clutch C1, a second clutch C2, a first brake B1, a second brake B2, a third brake B3 and one-way clutches F1 and F2 for transmitting the torque selectively between the individual elements of the first planetary gear unit 31 and the second planetary gear unit 32.

The first planetary gear unit 31 is composed of: a ring gear $R_1$ connected to a drive unit casing 34 through the third brake B3 and the one-way clutch F2 which are arranged in parallel with each other; a sun gear $S_1$ formed on a sun gear shaft 36 fitted on and rotatably supported by the output shaft 14; a carrier $CR_1$ connected to the counter drive gear 21; and pinions $P_{1A}$ and $P_{1B}$ meshing between the ring gear $R_1$ and the sun gear $S_1$ and rotatably supported by the carrier $CR_1$.

Moreover, the sun gear shaft 36 is connected through the second clutch C2 to the output shaft 14. The sun gear shaft 36 is further connected through the first brake B1 to the drive unit casing 34 and through the one-way clutch F1 and the second brake B2, as arranged in series, to the drive unit casing 34.

On the other hand, the second planetary gear unit 32 is composed of: a ring gear $R_2$ connected through the first clutch C1 to the output shaft 14; a sun gear $S_2$ formed on the sun gear shaft 36 integrally with the sun gear $S_1$; a carrier $CR_2$ connected to the carrier $CR_1$; and a pinion $P_2$ meshing between the ring gear $R_2$ and the sun gear $S_2$, rotatably supported by the carrier $CR_2$ and formed integrally with the pinion $P_{1B}$.

Moreover, the counter drive gear 21 is made to mesh with the counter driven gear 22 arranged in the auxiliary transmission 19, to transmit the rotation, as has its speed changed by the main transmission 18, to the auxiliary transmission 19.

This auxiliary transmission 19 is equipped with a third planetary gear unit 38 and with a third clutch C3, a fourth brake B4 and a one-way clutch F3 for transmitting the torque selectively between the individual elements of the third planetary gear unit 38.

The third planetary gear unit 38 is composed of: a ring gear $R_3$ connected to the counter driven gear 22; a sun gear $S_3$ formed on a sun gear shaft 39 rotatably fitted on the output shaft 23; a carrier $CR_3$ fixed on the output shaft 23; and a pinion $P_3$ meshing between the ring gear $R_3$ and the sun gear $S_3$ and rotatably supported by the carrier $CR_3$.

Here will be described the operations of the automatic transmission having the construction thus far described.

In Fig. 3: reference characters S1 designate a first solenoid valve; characters S2 a second solenoid valve; characters S3 a third solenoid valve; characters C1 the first clutch; characters C2 the second clutch; characters C3 the third clutch; characters B1 the first brake; characters B2 the second brake; characters B3 the third brake; characters B4 the fourth brake; and characters F1 to F3 the one-way clutches. Moreover: letter R designates a reverse running range; letter N an N-range; letter D a D-range; characters 1ST a 1st-speed gear stage; characters 2ND a 2nd-speed gear stage; characters 3RD a 3rd-speed gear stage; and characters 4TH a 4th-speed gear stage.

Moreover, symbol ○ indicates that a first solenoid signal $S_1$, a second solenoid signal $S_2$ and a third solenoid signal $S_3$ for opening/closing the first solenoid valve S1, the second solenoid valve S2 and the third solenoid valve S3 respectively are ON, that the first clutch C1, the second clutch C2, the third clutch C3, the first brake B1, the second brake B2, the third brake B3 and the fourth brake B4 are applied, and that the one-way clutches F1 to F3 are locked. On the other hand, symbol X indicates that the first solenoid signal $S_1$, the second solenoid signal $S_2$ and the third solenoid signal $S_3$ for opening/closing the first solenoid valve S1, the second solenoid valve S2 and the third solenoid valve S3 are OFF, that the first clutch C1, the second clutch C2, the third clutch C3, the first brake B1, the second brake B2, the third brake B3 and the fourth brake B4 are released, and that the one-way clutches F1 to F3 are free.

Incidentally, symbol Δ indicates the state in which the component is turned ON/OFF at the neutral control time, and symbol (○) indicates that the third brake B3 is applied at the engine brake time.

At the 1st speed in the D-range, the first clutch C1 and the fourth brake B4 are applied to lock the one-way clutches F2 and F3. Then, the rotation of the output shaft 14 is transmitted through the first clutch C1 to the ring gear $R_2$. In this state, the rotation of the ring gear $R_1$ is blocked by the one-way clutch F2 so that the rotation of the carrier $CR_2$ is drastically decelerated and transmitted to the counter driven gear 21 while rotating the sun gear $S_2$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is further decelerated and transmitted to the output shaft 23.

At the 2nd speed in the D-range, on the other hand, the first clutch C1, the first brake B1, the second brake B2 and the fourth brake B4 are applied to lock the one-way clutches F1 and F3. Then, the rotation of the output shaft 14 is transmitted through the first clutch C1 to the ring gear $R_2$. The rotation of this ring gear $R_2$ is decelerated and transmitted to the carrier $CR_2$, because the rotation of the sun gear $S_2$ is blocked by the second brake B2 and the one-way clutch F1. The rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the rotation of the sun gear $S_3$ is blocked by the fourth brake B4 so that the rotation of the carrier $CR_3$ is decelerated and transmitted to the output shaft 23.

Next, at the 3rd speed in the D-range, the first clutch C1, the third clutch C3, the first brake B1 and the second brake B2 are applied to lock the one-way clutch F1. Then, the rotation of the output shaft 14 is transmitted through the first clutch C1 to the ring gear $R_2$. The rotation of this ring gear $R_2$ is decelerated and transmitted to the carrier $CR_2$ because the rotation of the sun gear $S_2$ is blocked by the second brake B2 and the one-way clutch F1. The rotation of the carrier $CR_2$ is transmitted to the counter drive gear 21 while rotating the ring gear $R_1$ idly.

The rotation, as transmitted from the counter drive gear 21 to the counter driven gear 22, is transmitted to the ring gear $R_3$. However, the relative rotation between the carrier $CR_3$ and the sun gear $S_3$ is blocked by the third clutch C3 so that the third planetary gear unit 38 comes into a direct-coupled state. As a result, the rotation of the counter driven gear 22 is unchangedly transmitted to the output shaft 23.

Next, at the 4th speed in the D-range, the first clutch C1, the second clutch C2, the third clutch C3 and the second brake B2 are applied. Then, the rotation of the output shaft 14 is transmitted through the first clutch C1 to the ring gear $R_2$ and through the second clutch C2 to the sun gear $S_2$ to bring the first planetary gear unit 31 and the second planetary gear unit 32 into direct-coupled states. As a result, the rotation of the output shaft 11 is unchangedly transmitted to the counter drive gear 21.

The rotation, as transmitted from the counter drive gear 21 to the counter driven gear 22, is transmitted to the ring gear $R_3$. However, the relative rotation between the carrier $CR_3$ and the sun gear $S_3$ is blocked by the third clutch C3 so that the third planetary gear unit 38 comes into the direct-coupled state. As a result, the rotation of the counter driven gear 22 is unchangedly transmitted to the output shaft 23.

Incidentally, the automatic transmission is provided with a hydraulic control unit 40 for establishing the individual gear stages by applying/releasing the first clutch C1, the second clutch C2, the third clutch C3, the first brake B1, the second brake B2, the third brake B3 and the fourth brake B4.

On the other hand, the engine 10 is provided with an engine control unit 43 so that the engine 10 can be controlled by the engine control unit 43.

Moreover, the hydraulic control unit 40 and the engine control unit 43 are connected with the automatic transmission control system (ECU) 41 so that they are operated according to the control program of the automatic transmission control system 41.

With this automatic transmission control system 41, on the other hand, there are individually connected a neutral start switch 45, an oil temperature sensor 46, the RPM sensor 47, a brake switch 48, the engine RPM sensor 49, a throttle opening sensor 50 and a vehicle speed sensor 51.

Moreover, the shift position of the not-shown shift lever, i.e., the selected range can be detected by the neutral start switch 45. The temperature of the oil in the hydraulic control unit 40 can be detected by the oil temperature sensor 46. The output RPM of the torque converter 12 (as will be called the "clutch input side RPM") $N_{C1}$, as located at the input side of the first clutch C1, can be detected by the RPM sensor 47.

Furthermore, whether or not the not-shown brake pedal is depressed can be detected by the brake switch 48. An engine RPM $N_E$ can be detected by the engine RPM sensor 49. The throttle opening θ can be detected by the throttle opening sensor 50. The vehicle speed can be detected by the vehicle speed sensor 51.

Here will be described the hydraulic control unit 40.

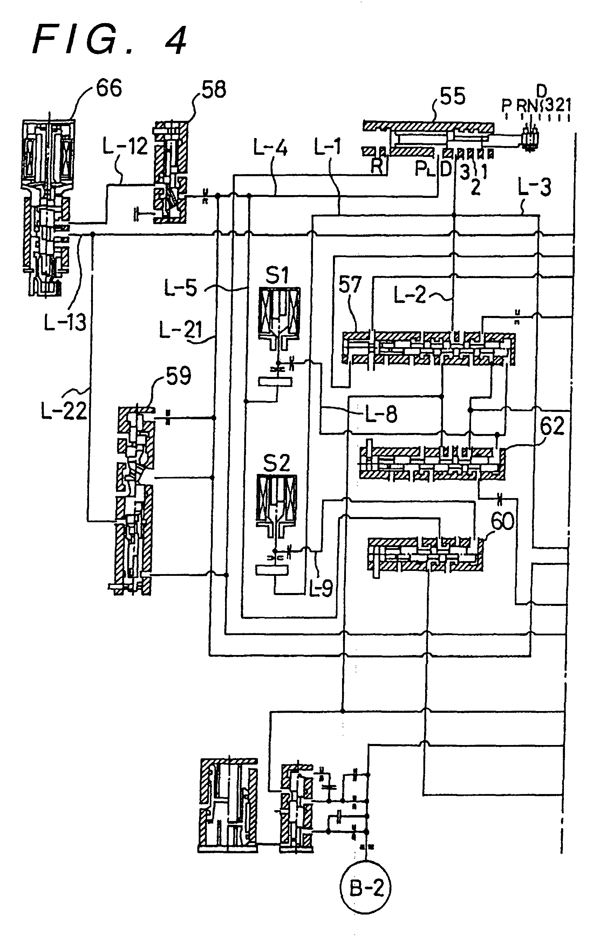

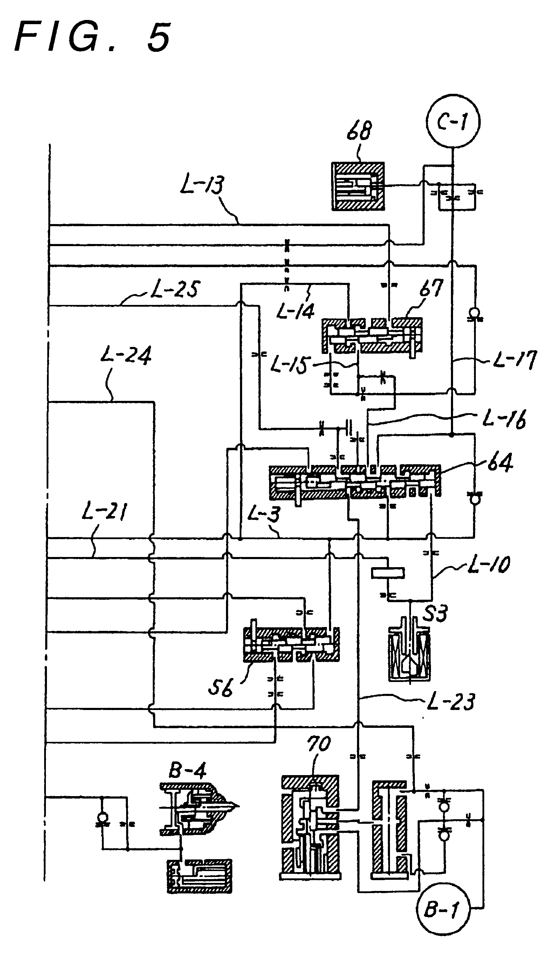

Fig. 4 is a first diagram showing a hydraulic control unit in the mode of embodiment of the present invention, and Fig. 5 is a second diagram showing a hydraulic control unit in the mode of embodiment of the present invention.

In these Figures, a primary valve 59 regulates the oil pressure coming from the not-shown oil pressure source and outputs it as a line pressure to an oil line L-21. Moreover, a manual valve 55 is provided with ports 1, 2, 3, D, $P_L$ and R so that the line pressure, as fed from the primary valve 59 through oil lines L-21 and L-4 to the port $P_L$, is established as 1-range, 2-range, 3-range, D-range and R-range pressures at the respective ports 1, 2, 3, D and R by manipulating the not-shown shift lever.

When this shift lever is placed in the D-range position, the D-range pressure oil, as established in the port D, is fed through an oil line L-1 to the second solenoid valve S2, through an oil line L-2 to a 1-2 shift valve 57, and through an oil line L-3 to a B-1 sequence valve 56. On the other hand, the line pressure from the primary valve 59 is fed through the oil line L-21 to the third solenoid valve S3.

Moreover, the line pressure from the oil line L-21 is fed through the oil line L-4 to a solenoid modulator valve 58 and through an oil line L-5 to the first solenoid valve S1 and a 2-3 shift valve 60.

The first solenoid signal $S_1$, the second solenoid signal $S_2$ and the third solenoid signal $S_3$ for opening/closing the first solenoid valve S1, the second solenoid valve S2 and the third solenoid valve S3 are turned ON/OFF in response to a change-over signal coming from the automatic transmission control system 41 (Fig. 2). As a result, the first solenoid valve S1 feeds a signal oil pressure through an oil line L-8 to the 1-2 shift valve 57 and a 3-4 shift valve 62. The second solenoid valve S2 feeds a signal oil pressure through an oil line L-9 to the 2-3 shift valve 60. The third solenoid valve S3 feeds a change-over signal oil pressure through an oil line L-10 to a neutral relay valve 64.

The 1-2 shift valve 57 takes its upper half position (as located above the spool) at the 1st speed and its lower half position (as located below the spool) at the 2nd to 4th speeds. The 2-3 shift valve 60 takes its lower half position at the 1st and 2nd speeds and its upper half position at the 3rd and 4th speeds. The 3-4 shift valve 62 takes its upper half position at the 1st and 4th speeds and its lower half position at the 2nd and 3rd speeds. The neutral relay valve 64 takes its upper half position at the neutral control time and its lower half position at the 1st to 4th speeds.

The solenoid modulator valve 58 is connected through an oil line L-12 to a linear solenoid valve 66, which is connected through an oil line L-13 to a C-1 control valve 67. The linear solenoid valve 66 is further connected through an oil line L-22 to the primary valve 59.

Moreover, the linear solenoid valve 66 is controlled by a control signal received from the automatic transmission control system 41, to feed a throttle pressure $P_{TH}$ as the control signal oil pressure through the oil line L-13 to the C-1 control valve 67. This C-1 control valve 67 is fed with the D-range pressure through the oil lines L-3 and L-14 so that it controls the fed D-range pressure to the control oil pressure (as will be called the "C-1 oil pressure") $P_{C1}$ of the hydraulic servo C-1, as corresponding to the throttle pressure $P_{TH}$ coming from the linear solenoid valve 66, and feeds it to an oil line L-15.

In the B-1 sequence valve 56, a spring is arranged at the lefthand end of the drawing whereas a control oil chamber is formed at the righthand end of the drawing, and the spring applies a spring load to the spool. Moreover, the B-1 sequence valve 56 is caused at the 1st speed to take its lower half position in response to the D-range pressure it receives at the control oil chamber through the oil line L-3. When the oil pressure is fed at the 2nd speed to a hydraulic servo B-2 so that it rises, the B-1 sequence valve 56 receives the sequence pressure from the hydraulic servo B-2 so that it is caused to take its upper half position by having its spool pushed rightward by the sequence pressure and the spring load.

As a result, the oil pressure from the 1-2 shift valve 57 is fed through the B-1 sequence valve 56 to the 3-4 shift valve 62 and further from the 3-4 shift valve 62 through an oil line L-24 and the B-1 control valve 70 to a hydraulic servo B-1. Thus, the oil pressure is fed to the hydraulic servo B-1 in response to the rise of the oil pressure in the hydraulic servo B-2.

Incidentally, the neutral relay valve 64 takes its upper half position at the neutral control time. In this neutral control, therefore, the C-1 oil pressure $P_{C1}$, as established in the oil line L-15, is fed through an oil line L-16, the neutral relay valve 64 and an oil line L-17 to the hydraulic servo C-1. On the other hand, the oil pressure, as fed through the B-1 sequence valve 56 to the 3-4 shift valve 62, is also fed to the 1-2 shift valve 57 and further as the signal pressure from the 1-2 shift valve 57 through an oil line L-25, the neutral relay valve 64 and an oil line L-23 to the B-1 control valve 70

At the 1st to 4th speeds, moreover, the neutral relay valve 64 takes its lower half position. At the 1st to 4th speeds, therefore, the oil under the D-range pressure is fed through the oil line L-3, the neutral relay valve 64 and the oil line L-17 to the hydraulic servo C-1. In the neutral control, moreover, the neutral relay valve 64 is switched to its upper half position to connect the oil line L-16 and the oil line L-17.

Incidentally, numeral 68 designates a damper valve which is arranged in the oil line L-17 for smoothing the release of the oil from the hydraulic servo C-1, and characters B-4 designate a hydraulic servo of the fourth brake B4 (Fig. 3).

Here will be described the neutral control.

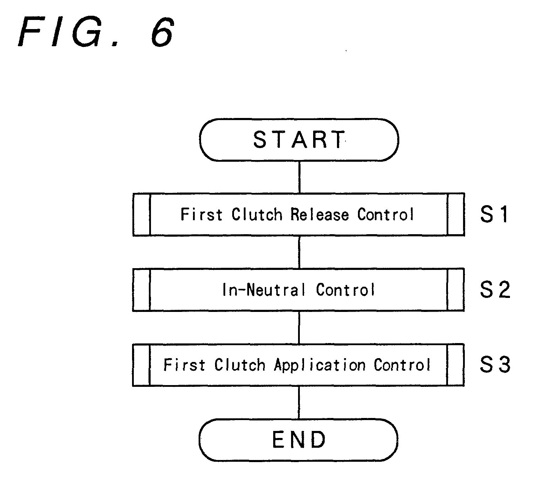

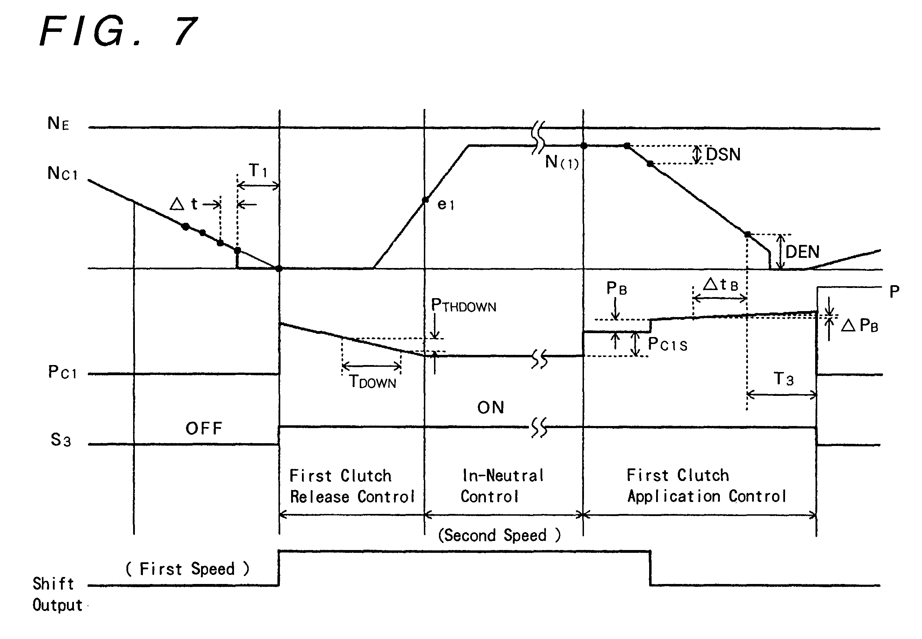

Fig. 6 is a flow chart of a neutral control routine in the mode of embodiment of the present invention, and Fig. 7 is a time chart of an automatic transmission control system in the mode of embodiment of the present invention. Incidentally, Fig. 7 is invoked in the later description of the individual subroutines.

Step S1: The automatic transmission control system 41 (Fig. 1) executes the first clutch release control. At this step, a zero vehicle speed is estimated to output the 2nd speed shift output at a set timing so that the applications of the second brake B2 (Fig. 2) and the first brake B1 are started to perform the hill-hold control thereby to sweep down the C-1 oil pressure $P_{C1}$ at a set timing.

For this, the engine RPM $N_E$ corresponding to the input torque is determined to output the C-1 oil pressure $P_{C1}$ corresponding to the engine RPM $N_E$, and the C-1 oil pressure $P_{C1}$ is gradually lowered.

Incidentally, the input torque can be detected not only from the engine RPM $N_E$ but also indirectly from the engine air suction or the fuel injection rate. Moreover, the input torque of the speed change unit 16 can also be directly detected by the not-shown torque sensor. In this case, moreover, the torque sensor is attached to the output shaft 14 of the torque converter 12.

Step S2: An in-neutral control is executed to establish the neutral control state. At this step, stabilizations of the engine RPM $N_E$ and the clutch input side RPM $N_{C1}$ are awaited. After these stabilizations, the C-1 oil pressure $P_{C1}$ is raised or lowered by set pressures according to the two RPMs.

Step S3: The booster means 105 executes a first clutch application control. At this step, the C-1 oil pressure $P_{C1}$ is raised by set pressures which is set on the basis of the throttle opening θ and the engine RPM $N_E$, to end the movement of the piston in the piston stroke of the hydraulic servo C-1 (Fig. 5). After the end of the movement of the piston in the piston stroke of the hydraulic servo C-1, the C-1 oil pressure $P_{C1}$ is raised by set pressures to prevent the application shock.

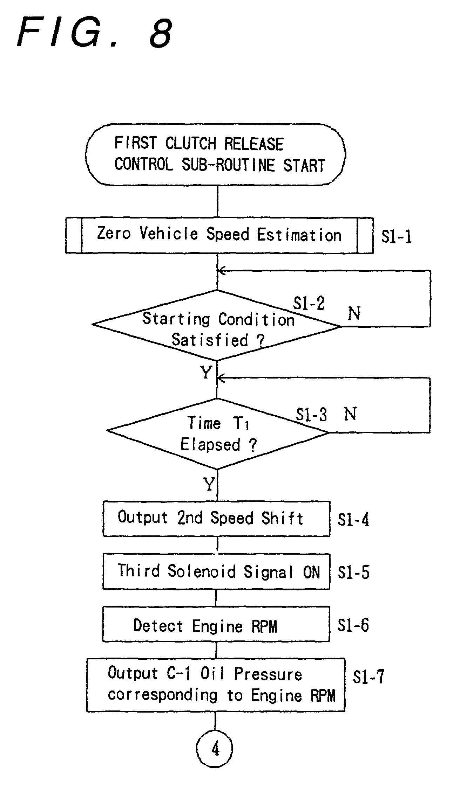

Next, the first clutch release control sub-routine at Step S1 of Fig. 6 will be described with reference to Figs. 8 to 10.

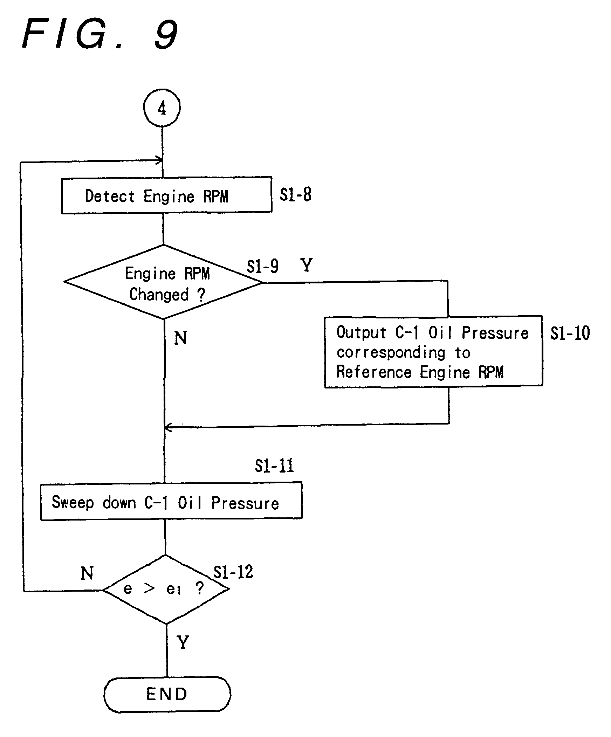

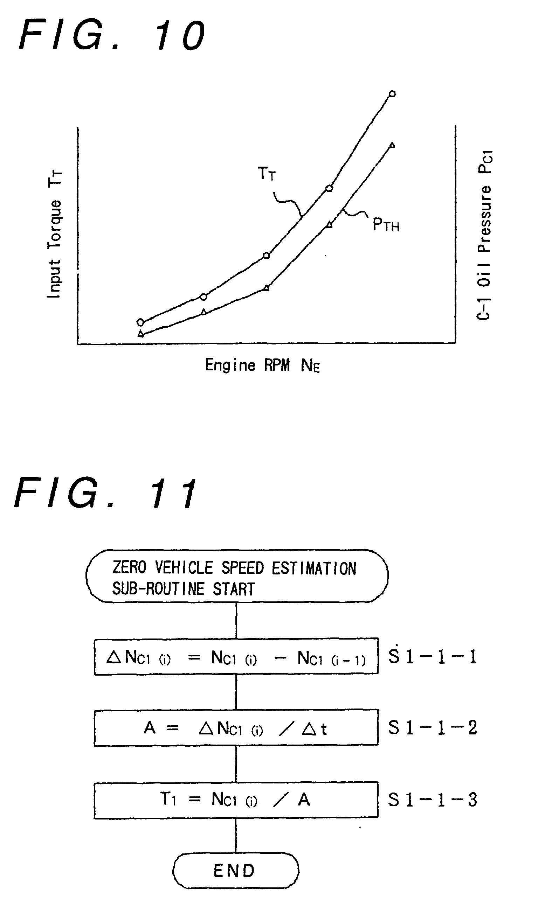

Fig. 8 is a first flow chart of a first clutch release control routine in the mode of embodiment of the present invention; Fig. 9 is a second flow chart of the first clutch release control routine in the mode of embodiment of the present invention; and Fig. 10 is a diagram of relations between an engine RPM, and an input torque and a throttle pressure in the mode of embodiment of the present invention. Incidentally, in Fig. 10, the abscissa indicates the engine RPM $N_E$, and the ordinate indicates the intake torque $T_T$ ($= t \cdot C \cdot N_E^2$) and the C-1 oil pressure $P_{C1}$.

Step S1-1: The zero vehicle speed is estimated on the basis of the variation of the clutch input side RPM $N_{C1}$.

Step S1-2: The satisfaction of the starting condition for the neutral control is awaited. At the same time, the timing of the not-shown first timer is started.

In this case, it is decided that the starting condition is satisfied, if all the following individual conditions are satisfied: that the clutch input side RPM $N_{C1}$ is substantially zero; that the not-shown accelerator pedal is released so that the throttle opening θ is less than a predetermined value; that the oil temperature detected by the oil temperature sensor 46 (Fig. 2) is higher than a predetermined value; and that the not-shown brake pedal is depressed so that the brake switch 48 is ON. Incidentally, whether or not the clutch input side RPM $N_{C1}$ is substantially zero is decided depending upon whether or not the detection limit of the RPM sensor 47 is detected. In the present mode of embodiment, it is decided that the detection limit is detected, when the actual vehicle speed takes a set value (2 [km/h]).

Step S1-3: It is awaited that a time period $T_1$ timed by the first timer has elapsed. In this case, the time period $T_1$ is calculated by the zero vehicle speed estimation step, and the zero vehicle speed is estimated when the time period $T_1$ elapses.

Step S1-4: the 2nd-speed shift output for starting the hill-hold control is generated, and the first solenoid signal $S_1$ for opening/closing the first solenoid valve S1 (Fig. 4) is turned ON to feed the oil pressure to the hydraulic servo B-2 thereby to apply the second brake B2. As the oil pressure in the hydraulic servo B-2 rises, moreover, the sequence pressure in the hydraulic servo B-2 is fed to the B-1 sequence valve 56 (Fig. 5) to feed the oil pressure to the hydraulic servo B-1 thereby to apply the first brake B1.

Thus, the hill-hold control is executed to establish the 2nd-speed gear stage in the speed change unit 16 so that the first clutch C1, the first brake B1, the second brake B2 and the fourth brake B4 are applied to lock the one-way clutches F1 and F3. If the vehicle runs backward uphill in this state, a backward rotation is transmitted to the output shaft 23 of the auxiliary transmission 19 to rotate the ring gear $R_1$ forward. However, this forward rotation is blocked by the one-way clutch F2 so that the vehicle does not run backward.

Step S1-5: The third solenoid signal $S_3$ is turned ON to switch the neutral relay valve 64 to the upper half position thereby to bring the C-1 oil pressure $P_{C1}$ into a controllable state.

Step S1-6: As shown in Fig. 10, the engine RPM $N_E$ corresponding to the input torque $T_T$ is detected to set the value of the engine RPM $N_E$ to a reference engine RPM $N_{Em}$.

Step S1-7: The C-1 oil pressure $P_{C1}$ immediately before the first clutch C1 is released according to the engine RPM $N_E$ is established and outputted.

Step S1-8: The engine RPM $N_E$ corresponding to the input torque $T_T$ is detected again.

Step S1-9: The engine RPM $N_E$ is compared with the reference engine RPM $N_{Em}$ to decide whether or not it has changed. The sub-routine advances to Step S1-10, if the answer of the comparison of the engine RPM $N_E$ with the reference engine RPM $N_{Em}$ is YES, but to Step S1-11 if NOT.

Step S1-10: The value of the engine RPM $N_E$ when it is decided at Step S1-9 that the engine RPM $N_E$ has changed from the reference engine RPM $N_{Em}$ is set in the reference engine RPM $N_{Em}$, and the C-1 oil pressure $P_{C1}$ corresponding to the new reference engine RPM $N_{Em}$ is established and outputted.

Step S1-11: The C-1 oil pressure $P_{C1}$ is lowered (or swept down) by set pressures $P_{THDOWN}$ for every lapse of a set time period $T_{DOWN}$, as expressed by the following formula:

$$P_{TH} = P_{TH} - P_{THDOWN}.$$

Step S1-12: After the establishment of the released state of the first clutch C1, the pressure reduction of Step S1-11 is continued till a speed ratio e ($= N_{C1}/N_E$) exceeds a constant $e_1$. When the speed ratio e exceeds the constant $e_1$, the pressure reduction of Step S1-11 is stopped to end the sub-routine. If the speed ratio e fails to exceed the constant $e_1$, the sub-routine returns to Step S1-8. Incidentally, the constant $e_1$ is set to 0.75, for example, by considering the delay of the change in the clutch input side RPM $N_{C1}$ for the operation of the oil pressure for releasing the first clutch C1. Alternatively, the speed ratio e may be substituted by the clutch input side RPM $N_{C1}$.

Incidentally, the applied state of the first clutch C1 is to be detected by deciding whether or not the difference (as will be called the "rotational difference") △ N

between the engine RPM $N_E$ or the RPM at the input side of the torque converter 12 and the clutch input side RPM $N_{C1}$ or the RPM at the output side has changed. The rotational difference $\Delta N$ does not change no matter whether the first clutch C1 might be completely applied or released. This makes it difficult to discriminate the state, in which the first clutch C1 is completely applied, and the state in which the first clutch C1 is released.

By awaiting the excess of the speed ratio over the constant $e_1$, therefore, it is possible to reliably establish the state immediately before the application of the first clutch C1 is started. Incidentally, the rotational difference $\Delta N$ is calculated by the automatic transmission control system 41.

Here will be described the sub-routine of the zero vehicle speed estimation at Step S1-1 of Fig. 8

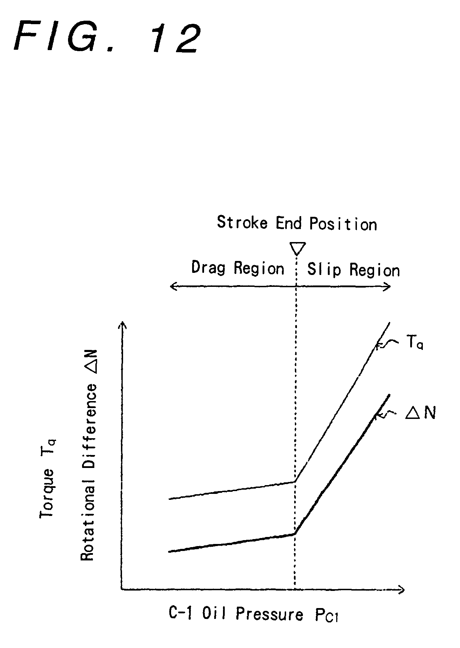

Fig. 11 is a flow chart of a zero vehicle speed estimating routine in the mode of embodiment of the present invention.

Step S1-1-1: An RPM difference $\Delta N_{C1(i)}$ is calculated by subtracting a clutch input side RPM $N_{C1(i-1)}$ of a time period $\Delta t$ ago from the present clutch input side RPM $N_{C1(i)}$. In this case, the time period $\Delta t$ is set with the clock in the automatic transmission control system 41 (Fig. 2) so that the clutch input side RPM $N_{C1}$ is detected by every time periods $\Delta t$.

Step S1-1-2: A deceleration A of the vehicle is calculated by dividing the RPM difference $\Delta N_{C1(i)}$ by the time period $\Delta t$.

Step S1-1-3: The time period $T_1$ till the vehicle stop state is calculated by dividing the present clutch input side RPM $N_{C1(i)}$ by the deceleration A.

Next, the relations between the applied/released states of the first clutch C1 and the rotational difference $\Delta N$ will be described with reference to Figs. 12 to 14.

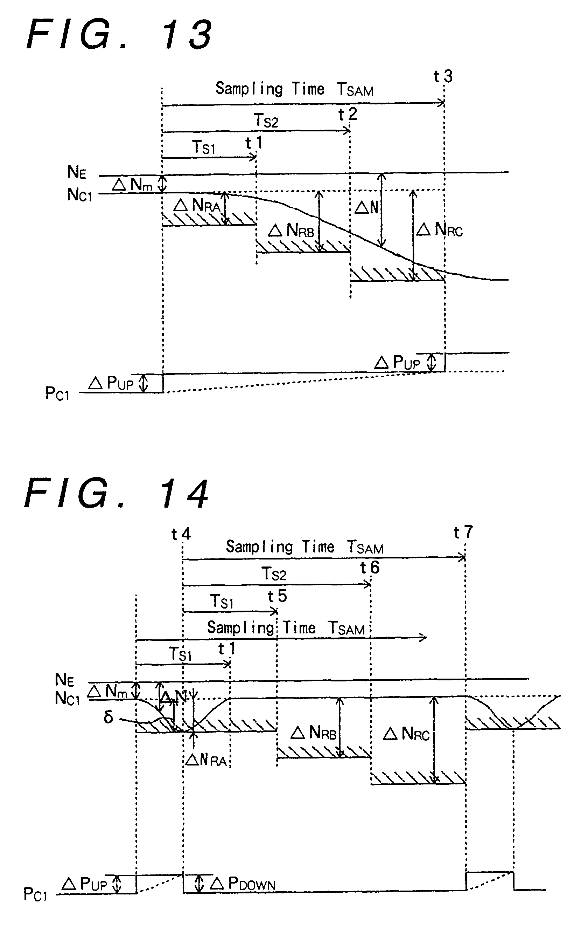

Fig. 12 is a diagram for explaining the state of a clutch in the mode embodiment of the present invention; Fig. 13 is a time chart when the first clutch in the mode of embodiment of the present invention is in a drag region; and Fig. 14 is a time chart when the first clutch in the mode embodiment of the present invention is in a slip region. Incidentally, in Fig. 12, the abscissa indicates the C-1 oil pressure $P_{C1}$, and the ordinate indicates the rotational difference $\Delta N$ and a torque $T_q$.

In Fig. 12, letters $T_q$ designate the torque to be transmitted from the engine 10 (Fig. 2) to the speed change unit 16 through the first clutch C1, and letters $\Delta N$ designate the rotational difference.

As the C-1 oil pressure $P_{C1}$ is gradually raised, the torque $T_q$ increases so that the torque converter 12 is accordingly loaded to increase the rotational difference $\Delta N$.

By calculating the rotational difference $\Delta N$, therefore, it is possible to acquire the applied/released states of the first clutch C1, i.e., the transmission state of the torque $T_q$.

When the application of the first clutch C1 is started from its completely released state to raise the C-1 oil pressure $P_{C1}$, the piston of the hydraulic servo C-1 reaches the position (as will be called the "stroke end position") in which no stroke is left. When the C-1 oil pressure $P_{C1}$ is further raised, the first clutch C1 comes into the completely applied state. Hence, the region from the completely released state of the first clutch C1 to the arrival of the piston at the stroke end position will be termed as the drag region (or inoperative region) whereas the region from the arrival of the piston at the stroke end position to the completely applied state of the first clutch C1 will be termed as the slip region (or operative region).

In the drag region, the individual friction elements of the first clutch C1 are not in contact with each other. However, the torque $T_q$ is transmitted more or less through the first clutch C1 by the viscosity characteristics of the oil existing between the individual friction elements. Moreover, the torque $T_q$ gradually increases, as the stroke of the piston increases whereas the clearances (or gaps) between the friction elements decrease. In the drag region, too, the rotational difference $\Delta N$ arises according to the transmission of the torque $T_q$ and gradually increases as the torque $T_q$ increases.

In the slip region, on the other hand, the individual friction elements are in contact with each other so that a frictional force comes out to increase the torque abruptly. Moreover, the piston has already reached the stroke end position so that the oil in the hydraulic servo C-1 quits its flow to raise the C-1 oil pressure abruptly. As a result, the frictional force is accordingly increased to increase the torque $T_q$ more. As a result of the abrupt increase in the torque $T_q$, moreover, the rotational difference $\Delta N$ abruptly increases.

Here will be described the relation between the amount (as will be called the "variation") $\delta$ of the rotational difference $\Delta N$ according to the change in the applied/released states of the first clutch C1 and the amount (as will be called the "rate of change") $\rho$ of the rotational difference $\Delta N$ for the unit time period. If the rotational difference $\Delta N$ at the start of a sampling time $T_{SAM}$ is assumed to be a reference rotational difference $\Delta N_m$, the variation $\delta$ can be expressed by the difference between the rotational difference $\Delta N$ and the reference rotational difference $\Delta N_m$ at an arbitrary time.

If the C-1 oil pressure $P_{C1}$ to be fed to the hydraulic servo C-1 is to be raised, the rotational difference $\Delta N$ changes gradually in the drag region but abruptly in the slip region, as described above. As a result, the variation $\delta$ in the rotational difference $\Delta N$ is small in the drag region but large in the slip region. Moreover, the rate of change $\rho$ of the rotational difference $\Delta N$ is also low in the drag region but high in the slip region.

Noting that the rate of change $\rho$ is different in the drag region and in the slip region, standard rates of change $\rho_1$ and $\rho_2$ in the drag region and in the slip region when the C-1 oil pressure $P_{C1}$ is raised are determined to suitably select an intermediate value between the two

rates of change $\rho_1$ and $\rho_2$, and this intermediate value is set as a reference rate of change $\rho_{REF}$.

If this reference rate of change $\rho_{REF}$ is thus set, the rate of change $\rho$ while the first clutch C1 is in the drag region is always smaller than the reference rate of change $\rho_{REF}$ whereas the rate of change while the first clutch C1 is in the slip region is always larger than the reference rate of change $\rho_{REF}$.

By comparing the rate of change $\rho$ and the reference rate of change $\rho_{REF}$, therefore, it can be easily decided whether the first clutch C1 is in the drag region or in the slip region. Specifically, it can be decided, if the rate of change $\rho$ is lower than the reference value $\rho_{REF}$, that the first clutch C1 is in the drag region and, if the rate of change $\rho_{REF}$ is higher than the reference value $\rho_{REF}$, that the first clutch C1 is in the slip region.

On the basis of this decision, moreover, it is possible to hold the state immediately before the first clutch C1 is transferred from the drag region to the slip region.

When the in-neutral control is started, the automatic transmission control system 41 lowers the C-1 oil pressure $P_{C1}$ till at least the piston of the hydraulic servo C-1 starts its retraction, so that the first clutch C1 is transferred from the slip region to the drag region.

Subsequently, the C-1 oil pressure $P_{C1}$ is so controlled that the rate of change $\rho$ of the rotational difference $\Delta N$ may not exceed the reference rate of change $\rho_{REF}$. Here in the present mode of embodiment, when the rate of change $\rho$ and the reference rate of change $\rho_{REF}$ are to be compared, the comparison is not made directly between them but between the variation $\delta$ of the rotational difference $\Delta N$ for a set time period and the threshold value corresponding to the reference rate of change $\rho_{REF}$.

As shown in Figs. 13 and 14, moreover, the aforementioned set time periods are exemplified by not only the sampling time $T_{SAM}$ but also the time periods $T_{S1}$ and $T_{S2}$ which are obtained by dividing the sampling time $T_{SAM}$ into three. If, in this case, the timings for the time periods $T_{S1}$ and $T_{S2}$ and the sampling time $T_{SAM}$ to elapse after the start of application of the first clutch C1 are designated by t1 to t3, respectively, the individual threshold values $\Delta N_{Ri}$ (i = A, B and C) of the timings t1 to t3 are expressed, as follows:

$$\Delta N_{RA} = \rho_{REF} \cdot T_{S1} ;$$

$$\Delta N_{RB} = \rho_{REF} \cdot T_{S2} ;$$

and

$$\Delta N_{RC} = \rho_{REF} \cdot T_{SAM}.$$

Since the rate of change $\rho$ is low in the drag region, the threshold value $\Delta N_{Ri}$ is not exceeded at the individual timings t1 to t3, as seen from Fig. 13, even if the variation $\delta$ of the rotational difference $\Delta N$ increases as the time elapses. Therefore, the automatic transmission control system 41 raises the C-1 oil pressure $P_{C1}$ by set pressures $\Delta P_{UP}$, as the sampling time $T_{SAM}$ elapses, to transfer the applied/released states of the first clutch C1 to the slip region side. Thus, the piston of the hydraulic servo C-1 is brought closer to the stroke end position each time the sampling time $T_{SAM}$ elapses.

When the piston reaches the stroke end position so that the first clutch C1 transfers to the slip region, the rate of change $\rho$ of the rotational difference $\Delta N$ exceeds the reference rate of change $\rho_{REF}$.

As shown in Fig. 14, for example, after the start of the application of the first clutch C1, the variation $\delta$ of the rotational difference $\Delta N$ exceeds a threshold value $N_{RA}$ at a timing t4 before lapse of the time period $T_{S1}$. Therefore, the automatic transmission control system 41 decides that the first clutch C1 has transferred from the drag region to the slip region at the timing t4 (i.e., at the instant when it is decided by the control program of the automatic transmission control system 41 that the variation $\delta$ has exceeded the threshold value $N_{RA}$), and lowers the C-1 oil pressure $P_{C1}$ by set pressures $\Delta P_{DOWN}$. At this timing t4, the sampling time $T_{SAM}$ is reset. If, in this case, the timings after lapses of the time period $T_{S1}$ and $T_{S2}$ and the sampling time $T_{SAM}$ from the timing t4 are respectively designated by t5 to t7, the threshold value $\Delta N_{Ri}$ is set at each of the timings t5 to t7.

Thus, the C-1 oil pressure $P_{C1}$ is lowered when the first clutch C1 transfers from the drag region to the slip region, the first clutch C1 is always held in the state immediately before it transfers from the drag region to the slip region.

Since the individual friction elements of the first clutch C1 are thus hardly brought into contact with each other, the torque $T_q$ to be transmitted from the engine 10 to the speed change unit 16 is extremely reduced. This makes it possible not only to improve the fuel economy but also to prevent any idle vibration in the vehicle. It is further possible to prevent the individual friction elements of the first clutch C1 from being heated to deteriorate their durability.

Moreover, since the piston of the hydraulic servo C-1 is held immediately ahead of the stroke end position, the loss stroke of the piston can be reduced. This makes it possible to prevent any delay in the application, as might otherwise be caused by the loss stroke. As a result, it is possible to prevent the racing and application shock of the engine 10.

In the aforementioned drag region, the variation $\delta$ of the rotational difference $\Delta N$ does not exceed the threshold value $\Delta N_{Ri}$ so that the automatic transmission control system 41 raises the C-1 oil pressure $P_{C1}$ by the set pressure $\Delta P_{UP}$ each time of lapse of the sampling time $T_{SAM}$, to transfer the applied/released states of the first clutch C1 to the side of the slip region. However, the rise of the actual C-1 oil pressure $P_{C1}$ in the hydraulic servo C-1 is delayed by the viscous resistance or the like of the oil when the C-1 oil pressure $P_{C1}$ is raised by the set pressure $\Delta P_{UP}$.

In the previous decision, it may be apparently decided that the variation $\delta$ does not exceed the threshold value $\Delta N_{Ri}$, if a delay is left in the rise of the C-1 oil pressure $P_{C1}$ at the instant of lapse of the sampling time $T_{SAM}$ after the C-1 oil pressure $P_{C1}$ has been raised by the set pressure $\Delta P_{UP}$. Since, in this case, the C-1 oil pressure $P_{C1}$ is raised more prematurely than necessary by the set pressure $\Delta P_{UP}$, the delays in the rise of the C-1 oil pressure $P_{C1}$ are accumulated to cause the overshoot at the transfer from the drag region to the slip region.

Moreover, the piston is retracted more than necessary if the sampling time $T_{SAM}$ is longer than necessary.

Therefore, this sampling time $T_{SAM}$ is so set to correspond to the necessary time period for the end of the actual change in the C-1 oil pressure $P_{C1}$ when the C-1 oil pressure $P_{C1}$ is raised by the set pressure $\Delta P_{UP}$, that the C-1 oil pressure $P_{C1}$ may be raised at proper time instants.

Thus, the C-1 oil pressure $P_{C1}$ is raised by the set pressure $\Delta P_{UP}$ after the delay in its rise has disappeared. As a result, no accumulation of delays can be caused to prevent the overshoot at the time when the first clutch C1 transfers from the drag region to the slip region.

Moreover, the piston of the hydraulic servo C-1 can be prevented from retracting more than necessary.

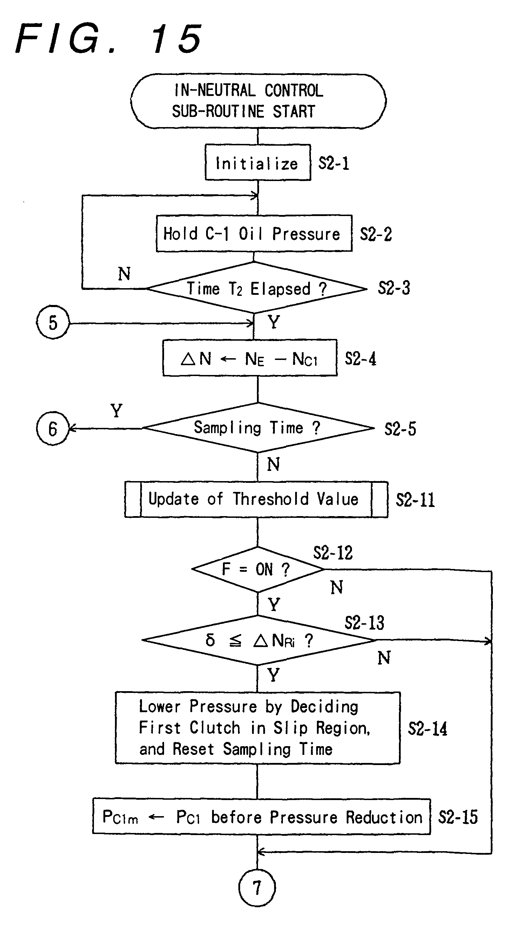

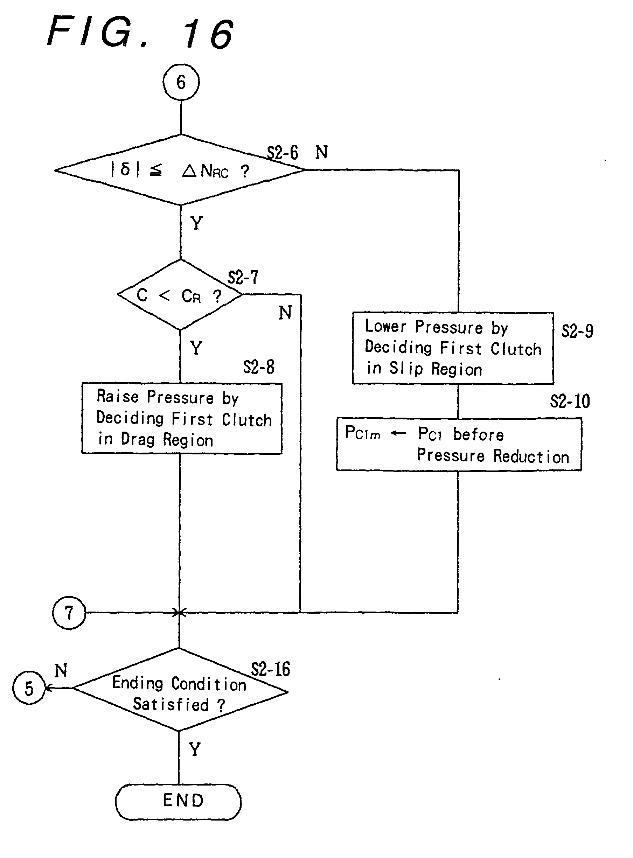

Next, the in-neutral control sub-routine of Step S2 of Fig. 6 will be described with reference to Figs. 15 and 16.

Fig. 15 is a first flow chart of an in-neutral control routine in the mode of embodiment of the present invention, and Fig. 16 is a second flow chart of an in-neutral control routine in the mode of embodiment of the present invention.

Step S2-1: The initial values of an oil pressure control flag F, a counted value C of the not-shown counter and the reference rotational difference $\Delta N_m$ are set, as follows:

$$F \leftarrow OFF;$$

$$C \leftarrow 0;$$

and

$$\Delta N_m \leftarrow \text{the value of the rotational}$$

$$\text{difference } \Delta N \ (= N_E - N_{C1})$$

at this time.

Steps S2-2 and S2-3: The C-1 oil pressure $P_{C1}$ is held at the final value in the first clutch releasing control routine. If the decision of whether or not the rotational difference $\Delta N$ has changed is started immediately after it has been confirmed that the first clutch C1 is released to the predetermined state, an erroneous decision may be made by the change in the rotational difference $\Delta N$, as caused by the pressure reduction in the first clutch release control routine. Therefore, the timing is performed by the not-shown second timer to await the elapse of a time period $T_2$, for which the C-1 oil pressure $P_{C1}$ is held. As a result, the decision on whether or not the rotational difference $\Delta N$ has changed is delayed so that the C-1 oil pressure $P_{C1}$ can be prevented from being controlled in an unstable state immediately after the first clutch C1 has been released. The routine advances to Step S2-4 if the time period $T_2$ elapses.

Step S2-4: The rotational difference $\Delta N$ is calculated by subtracting the clutch input side RPM $N_{C1}$ from the engine RPM $N_E$.

Step S2-5: It is decided whether or not the predetermined time $T_{SAM}$ such as 1.0 [secs] or 0.5 [secs] has elapsed. The routine advances to Step S2-6, if the sampling time $T_{SAM}$ has elapsed, but to Step S2-11 if the sampling time $T_{SAM}$ has not elapsed.

Step S2-6: It is decided whether or not the difference between the rotational difference $\Delta N$ and the reference rotational difference $\Delta N_m$, i.e., the absolute value of the variation $\delta$ is below a threshold value $\Delta N_{RC}$. The routine advances to Step S2-7, if the absolute value of the variation $\delta$ is below the threshold value $\Delta N_{RC}$, but to Step S2-9 if the absolute value of the variation $\delta$ is over the threshold value $\Delta N_{RC}$.

Step S2-7: It is decided whether or not the counted value C is below a set value $C_R$. The routine advances to Step S2-8, if the counted value C is below the set value $C_R$, but to Step S2-16 if over the set value $C_R$.

Step S2-8: Since the absolute value of the variation $\delta$ is below the threshold value $\Delta N_{RC}$ even after the sampling time $T_{SAM}$ has elapsed, it is decided that the first clutch C1 is in the drag region, and the at control system 41 raises (or boosts) the C-1 oil pressure $P_{C1}$ by the set pressure $\Delta P_{UP}$ at the instant when the sampling time $T_{SAM}$ elapses:

$$P_{C1} \leftarrow P_{C1} + \Delta P_{UP}.$$

Moreover, the rotational difference $\Delta N$ is set to the reference rotational difference $\Delta N_m$, and the oil pressure control flag F is turned ON:

$$\Delta N_m \leftarrow \Delta N;$$

and

$$F \leftarrow ON.$$

Step S2-9: It can be decided that the first clutch C1 is transferring from the drag region to the slip region. The C-1 oil pressure $P_{C1}$ is lowered (or reduced) by the set pressure $\Delta P_{DOWN}$ at the instant when the sampling time $T_{SAM}$ elapses:

$$P_{C1} \leftarrow P_{C1} - \Delta P_{DOWN}.$$

Moreover, the rotational difference $\Delta N$ is set to the reference rotational difference $\Delta N_m$, and the oil pressure control flag F is turned OFF. At the same time, the value "1" is subtracted from the counted value C of the counter:

$$\Delta N_m \leftarrow \Delta N;$$

$$F \leftarrow OFF;$$

and

$$C \leftarrow C - 1 \ (C = 0 \text{ for } C < 0).$$

If it is decided at Step S1-12 of the first clutch release routine that the speed ratio e exceeds the constant $e_1$, it is confirmed that the first clutch C1 is released to some extent. As a result, the first clutch release routine is ended, but the first clutch C1 is not so released that the piston of the hydraulic servo C-1 will start its retraction. This makes it necessary to lower the C-1 oil pressure $P_{C1}$ so much that the first clutch C1 may transfer from the slip region to the drag region. Thus, the operation of Step S2-9 is repeated till the first clutch C1 transfers from the slip region to the drag region.

Once the first clutch C1 transfers from the slip region to the drag region, it is held in the state immediately before the transfer from the drag region to the slip region, so that the operation of Step S2-9 is not executed.

When the variation $\delta$ increases over the threshold value $\Delta N_{RC}$, the first clutch C1 can be released so long as the piston of the hydraulic servo C-1 starts its retraction without fail, by repeating the operation of lowering the C-1 oil pressure $P_{C1}$ by the set pressure $\Delta P_{DOWN}$.

Step S2-10: The C-1 oil pressure $P_{C1}$ before the pressure reduction at Step S2-9 is set as a reference C-1 oil pressure $P_{C1m}$ and is stored in the not-shown storage device:

$$P_{C1m} \leftarrow P_{C1} \text{ before the pressure reduction.}$$

Step S2-11: The threshold value $\Delta N_{Ri}$ is updated.

Step S2-12: It is decided whether or not the oil pressure control flag F is ON, that is, whether or not the C-1 oil pressure $P_{C1}$ is raised at the instant of elapse of the previous sampling time $T_{SAM}$. The routine advances to Step S2-13, if the oil pressure control flag F is ON, but to Step S2-16 if the oil pressure control flag F is OFF.

Step S2-13: Since the C-1 oil pressure $P_{C1}$ is raised by the set pressure $\Delta P_{UP}$ (because the oil pressure control flag F is ON) at the instant of lapse of the previous sampling time $T_{SAM}$, it is decided whether or not the variation $\delta$ or the remainder of the rotational difference $\Delta N$ from the reference rotational difference $\Delta N_m$ is below the threshold value $\Delta N_{Ri}$. The routine advances to Step S2-14, if the variation $\delta$ is below the threshold value $\Delta N_{Ri}$, but to Step S2-16 if the variation $\delta$ is over the threshold value $\Delta N_{Ri}$.

Step S2-14: As a result, that the C-1 oil pressure $P_{C1}$ is raised by the set pressure $\Delta P_{UP}$ at the instant of elapse of the previous sampling time $T_{SAM}$ the rotational difference $\Delta N$ has highly changed. It is, therefore, decided that the first clutch C1 has transferred from the drag region to the slip region, and the C-1 oil pressure $P_{C1}$ is lowered (or reduced) by the set pressure $\Delta P_{DOWN}$ at the later-described instant of Step S2-16:

$$P_{C1} \leftarrow P_{C1} - \Delta P_{DOWN}.$$

Moreover, the sampling time $T_{SAM}$ is reset, and the oil pressure control flag F is turned OFF. At the same time, the value "1" is added to the counted value C of the counter:

$$\Delta N_m \leftarrow \Delta N;$$

$$F \leftarrow OFF;$$

and

$$C \leftarrow C + 1.$$

If, in this time, the C-1 oil pressure $P_{C1}$ is lowered by the set pressure $\Delta P_{DOWN}$, the first clutch C1 takes the state immediately before the transfer form the drag region to the slip region. It is, therefore, desired that the C-1 oil pressure $P_{C1}$ is raised again by the set pressure $\Delta P_{UP}$ at the instant when the varied C-1 oil pressure $P_{C1}$ is stabilized by lowering it by the set pressure $\Delta P_{DOWN}$. Therefore, it is detected that the C-1 oil pressure $P_{C1}$ has been lowered by the set pressure $\Delta P_{DOWN}$. At the instant of this detection, the sampling time $T_{SAM}$ is reset to start again the timing.

Thus, the C-1 oil pressure $P_{C1}$ is can be raised early by the set pressure $\Delta P_{UP}$ after it has been lowered by the set pressure $\Delta P_{DOWN}$, so that the first clutch C1 can be always held in the state immediately before the transfer from the drag region to the slip region.

Incidentally, if the reduction of the C-1 oil pressure $P_{C1}$ is detected when the variation $\delta$ exceeds the threshold value $\Delta N_{RC}$ after the sampling time $T_{SAM}$ has been reset, the operation of Step S2-9 is executed so that the C-1 oil pressure $P_{C1}$ is further lowered.

When the C-1 oil pressure $P_{C1}$ is lowered by the set pressure $\Delta P_{DOWN}$, the reference rotational difference $\Delta N_m$ is not set. Hence, the variation $\delta$ is the difference between the rotational difference $\Delta N$ and the reference rotational difference $\Delta N_m$ preceding by one, so that it basically takes substantial zero. Hence, the C-1 oil pressure $P_{C1}$ can be raised by the set pressure $\Delta P_{UP}$ after it has been lowered by the set pressure $\Delta P_{DOWN}$. As a result, the operation of Step S2-9 is hardly executed.

Step S2-15: The C-1 oil pressure $P_{C1}$ before lowered at Step S2-14 is set as the reference C-1 oil pressure $P_{C1m}$ and is stored in the not-shown storage device:

$$P_{C1m} \leftarrow P_{C1} \text{ before lowered.}$$

Step S2-16: It is decided whether or not the condition for ending the in-neutral control of the first clutch C1 is satisfied. The in-neutral control routine is ended, if the ending condition is satisfied, but is returned to Step S2-4 to repeat the aforementioned operation, if the ending condition is not satisfied.

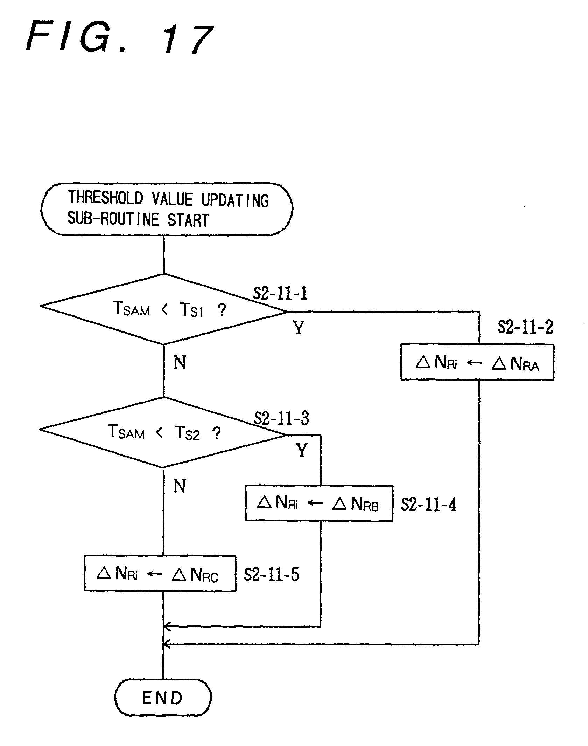

Next, the sub-routine for updating the threshold value $\Delta N_{Ri}$ at Step S2-11 of Fig. 15 will be described with reference to Fig. 17.

Fig. 17 is a flow chart of a threshold value updating routine in the mode of embodiment of the present invention.

In the present mode of embodiment: a threshold value $\Delta N_{RA}$ is set to 15 [rpm]; a threshold value $\Delta N_{RB}$ is set to 20 [rpm]; and a threshold value $\Delta N_{RC}$ is set to 30 [rpm].

Step S2-11-1: It is decided whether or not a time period (as will be called the "elapsed time") $T_{sam}$, as elapsed from the start of timing of the sampling time $T_{SAM}$, is shorter than the time $T_{S1}$. The routine advances to Step S2-11-2, if the elapsed time $T_{sam}$ is shorter than the time $T_{S1}$, but to Step S2-11-3 if the lapse time $T_{sam}$ is longer than the time $T_{S1}$.

Step S2-11-2: The value $\Delta N_{RA}$ is set as the threshold value $\Delta N_{Ri}$.

Step S2-11-3: It is decided whether or not the elapsed time $T_{sam}$ is shorter than the time $T_{S2}$. The routine advances to Step S2-11-4, if the elapsed time $T_{sam}$ is shorter than the time $T_{S2}$, but to Step S2-11-5 if the elapsed time $T_{sam}$ is longer than the time $T_{S2}$.

Step S2-11-4: The value $\Delta N_{RB}$ is set as the

threshold value $\Delta N_{Ri}$.

Step S2-11-5: The value $\Delta N_{RC}$ is set as the threshold value $\Delta N_{Ri}$.

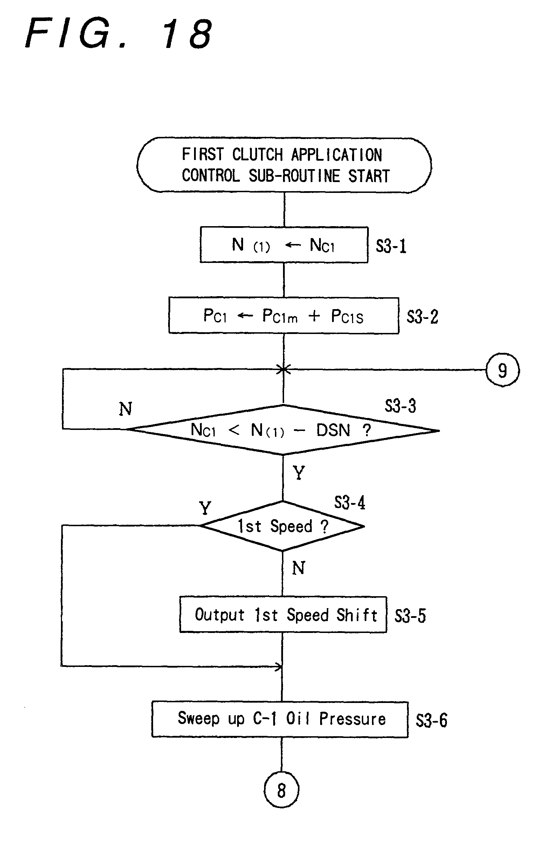

Next, the first clutch application control sub-routine at Step S3 of Fig. 6 will be described with reference to Figs. 18 to 20.

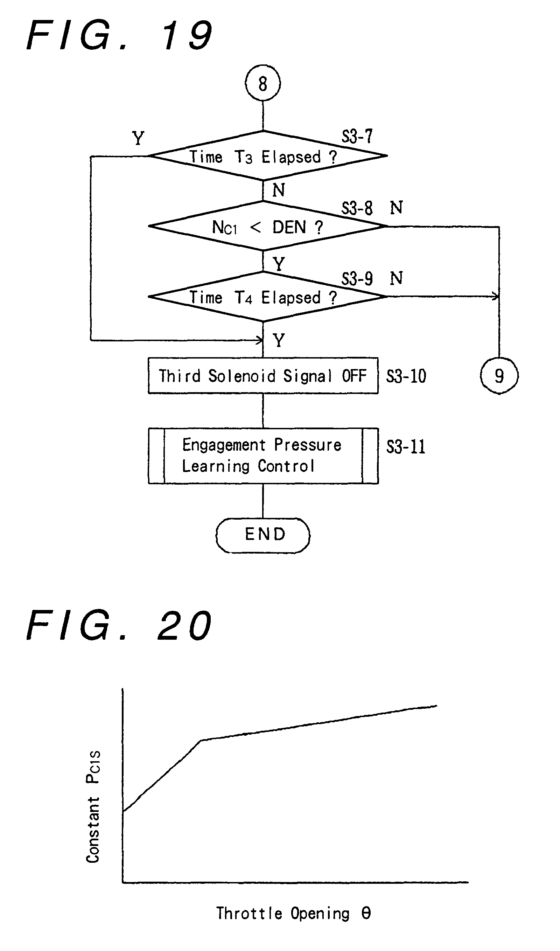

Fig. 18 is a first flow chart of a first clutch application control sub-routine in the mode of embodiment of the present invention; Fig. 19 is a second flow chart of a first clutch application control sub-routine in the mode of embodiment of the present invention; and Fig. 20 is a diagram of a map in the mode of embodiment of the present invention. Incidentally, the abscissa of Fig. 20 indicates the throttle opening $\theta$ , and the ordinate indicates a constant $P_{C1S}$.

Step S3-1: The clutch input side RPM $N_{C1}$ at the instant when the ending condition of the in-neutral control is satisfied is set and stored as a value $N_{(1)}$ in the not-shown memory of the automatic transmission control system 41 (Fig. 2). Simultaneously with this, the timing of the third timer is started.

Step S3-2: With reference to the map of Fig. 2, the constant $P_{C1S}$ is read in as the shelf pressure set to correspond to the throttle opening $\theta$ . This constant $P_{C1S}$ is added as a shelf pressure to the reference C-1 oil pressure $P_{C1m}$ as the base pressure which is set at Steps S2-10 and S2-15, and this summation is set as the C-1 oil pressure $P_{C1}$. Incidentally, the constant $P_{C1S}$ is to such a value as to move the not-shown piston of the hydraulic servo C-1 (Fig. 5) without fail and to weaken the application shock to be caused by the application.

When the driver performs the starting operation so that the transfer of the vehicle from the stop state to the start state is detected, the constant $P_{C1S}$ is added to the reference C-1 oil pressure $P_{C1m}$ so that the oil pressure to be fed to the hydraulic servo C-1 is raised to bring the first clutch C1 into a partially applied state. Subsequently, the oil pressure to be fed to the hydraulic servo C-1 is further raised to bring the first clutch C1 into the completely applied state.

Step S3-3: It is awaited that the clutch input side RPM $N_{C1}$ becomes smaller than the remainder of the value $N_{(1)}$ from a constant DSN. If the clutch input side RPM $N_{C1}$ becomes smaller than the remainder of the value $N_{(1)}$ from the constant DSN, the routine decides the start of application of the first clutch C1 and advances to Step S3-4.

Step S3-4: It is decided whether or not the gear stage is at the 1st speed. The routine advances to Step S3-6, if at the 1st speed, but to Step S3-5 if not at the 1st speed.

Step S3-5: The 1st speed shift output is generated.

Step S3-6: The throttle pressure $P_{TH}$ from the linear solenoid valve 66 (Fig. 4) is changed to set the C-1 oil pressure $P_{C1}$ to set a pressure $P_B$ (Fig. 7), and this C-1 oil pressure $P_{C1}$ is then swept up. After this, the C-1 oil pressure $P_{C1}$ is raised by a set pressure $\Delta P_B$ at

each lapse of a time $\Delta t_B$ to continue the application of the first clutch C1.

Step S3-7: It is decided whether or not a time $T_3$, as timed by the third timer, has elapsed. The routine advances to Step S3-10, if the time $T_3$ elapses, but to Step S3-8 if the time $T_3$ does not elapse.

Step S3-8: It is decided whether or not the clutch input RPM $N_{C1}$ is below a constant DEN. The routine advances to Step S3-9, if the clutch input RPM $N_{C1}$ is over the constant DEN, but returns to Step S3-3 if the clutch input RPM $N_{C1}$ is below the constant DEN. Incidentally, if it is decided that the clutch input RPM $N_{C1}$ is below the constant DEN, the fourth timer starts the timing.

Step S3-9: It is decided whether or not a time $T_4$, as timed by the fourth timer, has elapsed. The routine advances to Step S3-10, if the time $T_4$ elapses, but returns to Step S3-3 if the time $T_4$ does not elapse.

In this case, the set values such as the constant $P_{C1S}$, the pressure $P_B$ or the set pressure $\Delta P_B$ are set on the basis of the variable such as the throttle opening $\theta$, as corresponding to the input torque $T_T$.

Step S3-10: The third solenoid signal S3 is turned OFF.

Step S3-11: For the next first clutch application sub-routine, the engagement pressure learning control is executed to correct the constant $P_{C1S}$.

In the first clutch engagement control sub-routine, the clutch input side RPM $N_{C1}$ is detected to start the sweep-up of the C-1 oil pressure $P_{C1}$ in a manner to correspond to the clutch input side RPM $N_{C1}$. Since, however, the clutch input side RPM $N_{C1}$, when the condition for ending the in-neutral control is satisfied is relatively low, the time period, as required for calculating the clutch input side RPM $N_{C1}$ by the RPM sensor 47, is elongated to cause a delay in the detection.

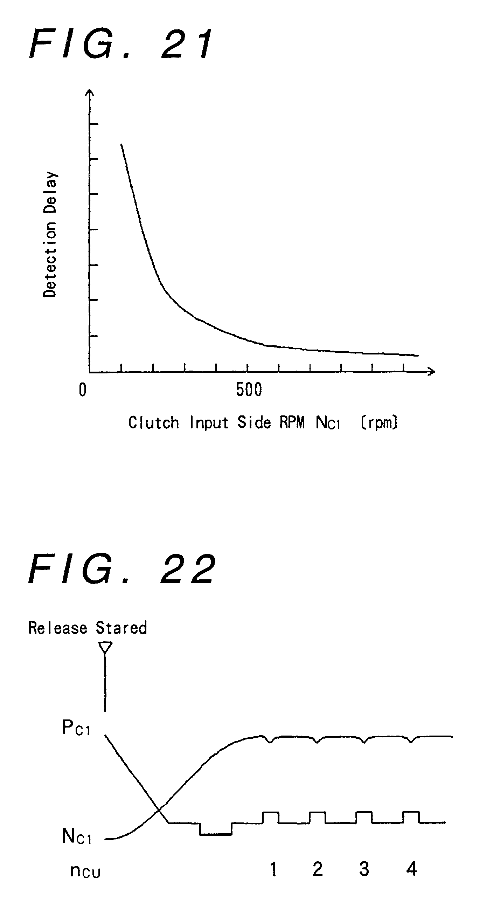

Fig. 21 is an explanatory diagram of the detection delay of the RPM sensor in the mode of embodiment of the present invention. Incidentally, the abscissa of Fig. 21 indicates the clutch input side RPM $N_{C1}$, and the ordinate indicates the detection delay.

It is found from Fig. 21 that the detection delay is the larger for the lower clutch input side RPM $N_{C1}$ to be detected by the RPM sensor 47 (Fig. 2).

In the present mode of embodiment, therefore, the RPM change rate of the clutch input side RPM $N_{C1}$ is detected, and the constant $P_{C1S}$ is corrected if the detected RPM change rate is different from the reference RPM change rate.

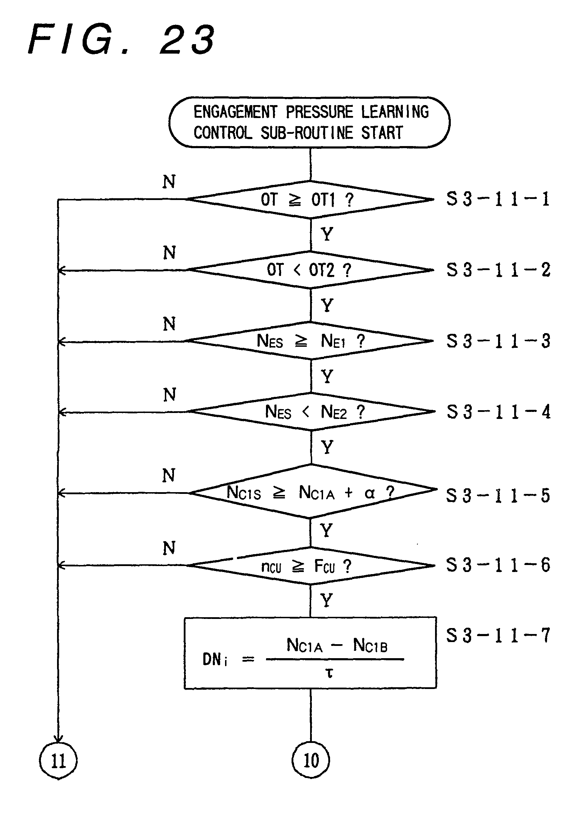

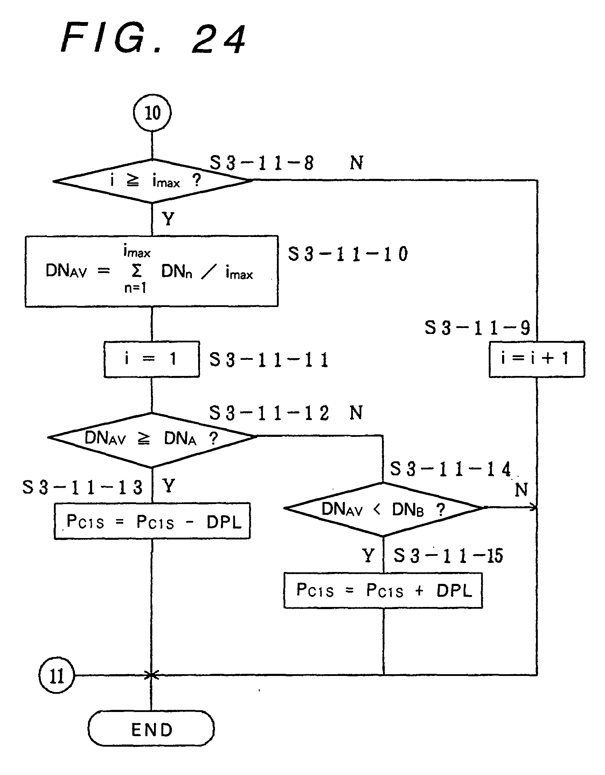

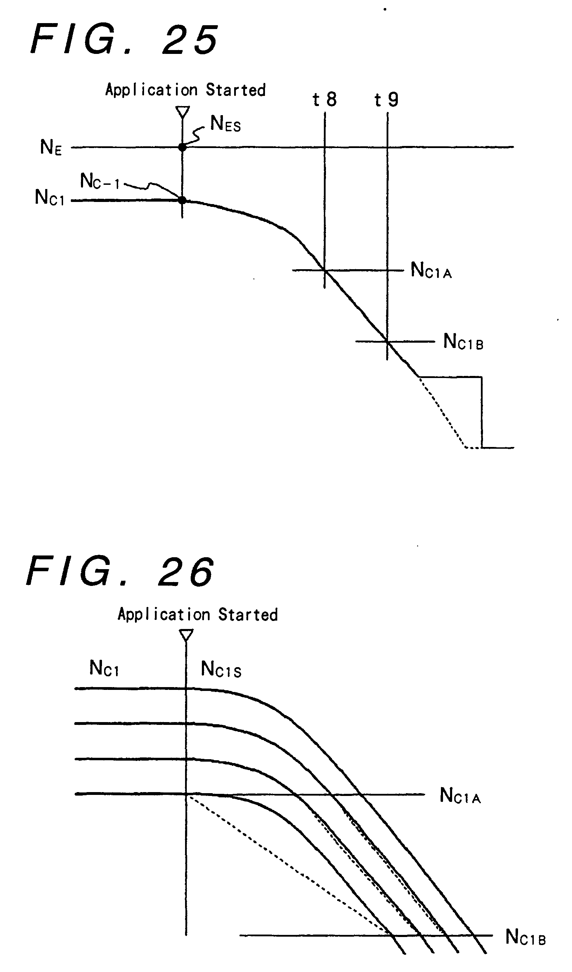

Fig. 22 is a time chart illustrating the number of oil pressure changes in the mode of embodiment of the present invention; Fig. 23 is a first flow chart illustrating the engagement pressure learning control in the mode of embodiment of the present invention; Fig. 24 is a second flow chart illustrating the engagement pressure learning control in the mode of embodiment of the present invention; Fig. 25 is a time chart for explaining the section of the clutch input side RPM in the mode of embodiment of the present invention; and Fig. 26 is a time chart for explaining the average change rate of the clutch input side RPM in the mode of embodiment of the present invention. Here, the individual values of an oil temperature OT in the engagement pressure learning control, an engagement starting engine RPM $N_{ES}$ when the first clutch C1 starts its engagement, the engine RPM $N_E$, the engagement starting clutch input side RPM $N_{C1S}$ when the first clutch C1 starts its engagement, a rise/drop repeating numbers $n_{CU}$ of the C-1 oil pressure $P_{C1}$ in the in-neutral control, the maximum $N_{C1A}$, the minimum $N_{C1B}$, an RPM change rate $DN_i$ and an average change rate $DN_{AV}$ are stored in the not-shown memory so that they are read out, if necessary.

Step S3-11-1: It is decided whether or not the oil temperature OT is over a level OT1. The sub-routine advances to Step S3-11-2, if the oil temperature OT is over the level OT1, but is ended if the oil temperature OT is below the level OT1.

Step S3-11-2: It is decided whether or not the oil temperature OP is below a level OT2. The sub-routine advances to Step S3-11-3, if the oil temperature OT is below the level OT2, but is ended if the oil temperature OT is over the level OT2.

Step S3-11-3: It is decided whether or not the engine RPM $N_{ES}$ when the first clutch C1 starts its engagement is over a value $N_{E1}$. The sub-routine advances to Step S3-11-4, if the engine RPM $N_{ES}$ at the engagement starting time is over the value $N_{E1}$, but is ended if the engine RPM $N_{ES}$ at the engagement starting time is below the value $N_{E1}$.

Step S3-11-4: It is decided whether or not the engine RPM $N_{ES}$ when the first clutch C1 starts its engagement is below a value $N_{E2}$. The sub-routine advances to Step S3-11-5, if the engine RPM $N_{ES}$ at the engagement starting time is below the value $N_{E2}$, but is ended if the engine RPM $N_{ES}$ at the engagement starting time is over the value $N_{E2}$.

Step S3-11-5: Let the case be considered in which the engaging characteristics are identical with only difference in the clutch input side RPM $N_{C1S}$ at the engagement starting time. If the RPM change rate $DN_i$ is uniformly detected in the section between the maximum $N_{C1A}$ and the minimum $N_{C1B}$ of the clutch input side RPM $N_{C1}$, the different RPM change rates $DN_i$ are detected, as indicated by broken curves, even for the identical engaging characteristics. It is, therefore, decided whether or not the clutch input side RPM $N_{C1S}$ at the time when the first clutch C1 starts its engagement is over the sum of the later-described maximum $N_{C1A}$ and a preset value $\alpha$. The sub-routine advances to Step S3-11-6, if the clutch input side RPM $N_{C1S}$ at the engagement starting time is over the sum of the later-described maximum $N_{C1A}$ and a preset value $\alpha$, but is ended if the clutch input side RPM $N_{C1S}$ at the engagement starting time is below the sum of the later-described maximum $N_{C1A}$ and a preset value $\alpha$.

Step S3-11-6: It is decided whether or not the number $n_{CU}$ of repeating the rise/drop of the C-1 oil pressure $P_{C1}$ in the in-neutral control, as shown in Fig. 22, is over a value $F_{CU}$. The sub-routine advances to Step S3-11-7, if the repetition number $n_{CU}$ is over the value $F_{CU}$, but is ended if the repetition number $n_{CU}$ is below the value $F_{CU}$. Incidentally, the first clutch C1 is substantially released if the repetition number $n_{CU}$ is over the value $F_{CU}$.

Step S3-11-7: The change rate detecting means 103 (Fig. 1) of the automatic transmission control system 41 sets the section for detecting the RPM change rate $DN_i$ of the clutch input side RPM $N_{C1}$ at the engaging time of the first clutch C1. In the present mode of embodiment, the maximum $N_{C1A}$ and the minimum $N_{C1B}$ of the clutch input side RPM $N_{C1}$ are set to set the section from timing t8 to timing t9, as shown in Fig. 25, on the basis of the maximum $N_{C1A}$ and the minimum $N_{C1B}$. Moreover, the RPM change rate DNi of the clutch input side RPM $N_{C1}$ in that section is detected (or calculated) by the following formula:

$$DN_i = (N_{C1A} - N_{C1B}) / \tau .$$

Here, letter $\tau$ indicates the time period from the timing t8 to the timing t9. Moreover, the minimum $N_{C1B}$ is set on the basis of the detection limit (300 [rpm]) of the RPM sensor 47.

Step S3-11-8: It is decided whether or not a value i is over a value $i_{max}$. The sub-routine advances to Step S3-11-10, if the value i is over the value $i_{max}$, and to Step S3-11-9 if the value i is below the value $i_{max}$.

Step S3-11-9: The value "1" is added to the value i.

Step S3-11-10: A unique RPM change rate $DN_i$ may be detected due to the dispersion of the oil pressure level. Therefore, the detections of the RPM change rate $DN_i$ are repeated by the same number as that of the value $i_{max}$. After this, the average change rate $DN_{AV}$ of the RPM change rate $DN_i$ is calculated by the following formula:

$$DN_{Av} = \sum_{n=1}^{i_{max}} DN_n / i_{max} .$$

Step S3-11-11: The value i is set to 1.

Step S3-11-12: It is decided whether or not the average $DN_{AV}$ is over the reference RPM change rate $DN_A$. The sub-routine advances to Step S3-11-13, if the average $DN_{AV}$ is over the reference RPM change rate $DN_A$, and to Step S3-11-14 if the average $DN_{AV}$ is below the reference RPM change rate $DN_A$.

Step S3-11-13: The correction means 104 of the automatic transmission control system 41 corrects the constant $P_{C1S}$ and subtracts a correction value DPL from the constant $P_{C1S}$.

Step S3-11-14: It is decided whether or not the average change rate $DN_{AV}$ is below the reference RPM change rate $DN_B$. The sub-routine advances to Step S3-11-15, if the average change rate $DN_{AV}$ is below the reference RPM change rate $DN_B$, but is ended if the average change rate $DN_{AV}$ is over the reference RPM change rate $DN_B$.

Step S3-11-15: The correction means 104 of the automatic transmission control system 41 corrects the constant $P_{C1S}$ and adds the correction value DPL to the constant $P_{C1S}$.

Thus, the RPM change rate $DN_i$ for the excessively high/low oil temperature OT is excluded so that no influence is exerted upon the detected RPM change rate $DN_1$ even if the feed state of the C-1 oil pressure $P_{C1}$ or the slip state of in the first clutch C1 may fluctuate with the change in the viscous resistance of the oil.

If the repetition number $n_{CU}$ is over the value $F_{CU}$, the first clutch C1 is held in the substantially released state by the in-neutral control so that the RPM change rate $DN_i$ is detected only when the first clutch C1 is to be applied from that state, while excluding the remaining RPM change rate $DN_i$. As a result, no influence is exerted upon the correction of the constant $P_{C1S}$.

Moreover, the RPM change rate $DN_i$ when the engine RPM $N_E$ is excessively higher or lower for the ordinary idling RPM is excluded so that the RPM change rate $DN_i$ is not influenced even if the engine RPM $N_E$ grows unstable.

Still moreover, there is excluded the RPM change rate $DN_i$ at the time when the clutch input side RPM $N_{C1}$ cannot be detected by the RPM sensor 47 because of the excessively small clutch input side RPM $N_{C1}$. As a result, no influence is exerted upon the RPM change rate $DN_i$ to be detected.

Furthermore, the RPM change rate $DN_i$ of the clutch input side RPM $N_{C1}$ is detected only when the clutch input side RPM $N_{C1S}$ at the engagement starting time is higher by the set value $\alpha$ than the maximum $N_{C1A}$ of the clutch input side RPM $N_{C1}$ in the aforementioned preset section.

As a result, the RPM change rate $DN_i$ at the initial engagement of the first clutch C1 is excluded from the detected RPM change rate $DN_i$ so that the RPM change rate $DN_i$ corresponding to the C-1 oil pressure $P_{C1}$ can be accurately detected. As a result, it is possible to prevent the erroneous learning.

Incidentally, the set value $\alpha$ is set to corresponding to the delay in the rise when the C-1 oil pressure $P_{C1}$ is fed to the hydraulic servo C-1 of the first clutch C1. As a result, it is possible to maximize the number of chances of correcting the characteristics which are set in the hydraulic control unit 40.

Moreover, the constant $P_{C1S}$ is corrected on the basis of the average change rate $DN_{AV}$ so that the RPM change rate $DN_i$ can be excluded when the unique RPM change rate $DN_i$ is detected. This makes it possible to detect the accurate RPM change rate $DN_i$.

Still moreover, the constant $P_{C1S}$ is corrected by adding/subtracting the correction value DPL so that the average change rate $DN_{AV}$ will not approach the reference RPM change rates $DN_A$ and $DN_B$ abruptly. As a result, the influence to be exerted upon the correction of the constant $P_{C1S}$ can be reduced even if the RPM change rate $DN_i$ detected is not accurate.

The present mode of embodiment has been described on the case in which the present invention is applied to the first clutch engagement control of the neutral control, but the present invention can also be applied to the N-D control, as accompanying the shift from the ordinary N-range to the D-range.

Incidentally, the present invention should not be limited to the foregoing mode of embodiment but can be modified in various manners on the basis of its gist, and these modifications should not be excluded from the scope of the present invention.

According to the present invention, as described hereinbefore, the control system for an automatic transmission comprises: a fluid transmission unit connected to an engine; a clutch adapted to be applied when a forward running range is selected, to transmit the rotation of the fluid transmission unit to a speed change unit; a hydraulic servo for applying the clutch when fed with an oil pressure; output RPM detecting means for detecting the output RPM of the fluid transmission unit; oil pressure generating means for generating the oil pressure to be fed to the hydraulic servo; and a control unit.

Moreover, the control unit includes: booster means for raising the oil pressure according to preset characteristics; change rate detecting means for detecting the RPM change rate of the output RPM in a preset section at the applied state of the clutch; and correction means for correcting the preset characteristics on the basis of a comparison result by comparing the RPM change rate, as detected by the change rate detecting means, with a reference RPM change rate.

Still moreover, the change rate detecting means detects the RPM change rate only when the output RPM at the time of starting the engagement of the clutch is higher by a preset value than the maximum of the output RPM in the preset section.

In this case, when the vehicle is to be started by selecting a forward running range from the state in which the neutral range is selected, and when the vehicle is to be started from the state in which the forward running range is selected but in which the neutral control is effected, the set characteristics of the oil pressure generating means are corrected on the basis of the RPM change rate of the output RPM of the fluid transmission unit.

Moreover, when the output RPM at the time of starting the engagement of the clutch is larger by a preset value than the maximum of the output RPM in the aforementioned preset section, the RPM change rate of the output RPM is detected.

As a result, the RPM change rate at the initial stage of engagement is excluded from the detected RPM change rate so that the RPM change rate corresponding to the oil pressure to be generated can be accurately detected. This makes it possible to prevent the erroneous learning.

In another control system for an automatic transmission of the present invention, the booster means lowers the oil pressure to be fed to the hydraulic servo thereby to release the clutch substantially when the vehicle is stopped while the forward running range is selected, and raises the oil pressure to be fed to the hydraulic servo, according to the preset characteristics when the vehicle is to be started.

In this case, when the vehicle is to be started from the state in which the forward running range is selected and in which the neutral control is effected, the preset characteristics of the oil pressure generating means are corrected on the basis of the RPM change rate of the output RPM of the fluid transmission unit.

In still another control system for an automatic transmission of the present invention, the preset value is set on the basis of the delay in the rise of the oil pressure to be fed to the hydraulic servo.

In this case, the preset value is set on the basis of the delay in the rise of the oil pressure so that the number of chances of correcting the preset characteristics of the oil pressure generating means can be maximized.

In a further control system for an automatic transmission of the present invention, the correction means corrects the preset characteristics on the basis of the result of the comparison between the average of a plurality of RPM change rates detected by the change rate detecting means and the reference RPM change rate.

In this case, the preset characteristics are corrected on the basis of the average value of the RPM change rates so that the unique RPM change rate can be excluded when detected. This makes it possible to detect an accurate RPM change rate.

In a further control system for an automatic transmission of the present invention, the correction means corrects the preset characteristics so that the RPM change rate, as detected by the change rate detecting means, may gradually approach the reference RPM change rate.

In this case, the detected RPM change rate does not approach the reference RPM change rate abruptly, so that the influences to be exerted upon the correction of the preset characteristics of the booster means can be reduced even if the detected RPM change rate is not accurate.

In a further control system for an automatic transmission of the present invention, the change rate detecting means detects the RPM change rate only when an oil temperature is within a preset range.

In this case, the RPM change rate for the excessively high/low oil temperature is excluded so that no influence is exerted upon the RPM change rate to be detected even if the feed state of the oil pressure and the slip state in the clutch are caused to fluctuate by the change in the viscous resistance of the oil.

In a further control system for an automatic transmission of the present invention, the change rate detecting means detects the RPM change rate only when the engagement of the clutch is started from the substantially released state.

In this case, the RPM change rate when the clutch is not substantially released is excluded so that no influence is exerted upon the correction of the present characteristics of the booster means even if an oil pressure having characteristics different from the present ones is fed.

In a further control system for an automatic transmission of the present invention, the change rate detecting means detects the RPM change rate only when the RPM of the engine is within a preset range.

In this case, the RPM change rate when the engine RPM is excessively high/low for the ordinary idling RPM is excluded so that no influence is exerted upon the RPM change rate even if the engine RPM becomes unstable.

In a further control system for an automatic transmission of the present invention, the minimum of the output RPM in the preset section is set on the basis of the detection limit of the output RPM detecting means.

In this case, the RPM change rate when the output RPM is so small that it cannot be detected by the output RPM detecting means is excluded so that no influence is exerted upon the RPM change rate to be detected.

**Claims**

1. A control system for an automatic transmission, comprising: a fluid transmission unit (12) connected to an engine (10); a clutch (C1) adapted to be applied when a forward running range is selected, to transmit the rotation of said fluid transmission unit (12) to a speed change unit (16); a hydraulic servo (C-1) for applying said clutch (C1) when fed with an oil pressure; output RPM detecting means (47) for detecting the output RPM of said fluid transmission unit (12); oil pressure generating means (40) for generating the oil pressure to be fed to said hydraulic servo (C-1); and a control unit (41),

    wherein said control unit (41) includes: booster means (105) for raising said oil pressure according to preset characteristics;

    correction means (104) for correcting said preset characteristics for the next application of the clutch (C1) on the basis of a comparison result; **characterized by**

    change rate detecting means (103) for detecting the RPM change rate of the output RPM in a preset section of the output RPM during application of said clutch by the booster means (105); wherein said correction means (104) compares the RPM change rate, as detected by said change rate detecting means (103), with a reference RPM change rate, and

    wherein said change rate detecting means (103) detects said RPM change rate only when the output RPM at the time of starting the engagement of said clutch (C1) is higher by a preset value than the maximum of the output RPM in said preset section.

2. A control system for an automatic transmission according to claim 1, wherein said booster means (105) lowers the oil pressure to be fed to said hydraulic servo (C-1) thereby to release said clutch (C1) substantially when the vehicle is stopped while the forward running range is selected, and raises the oil pressure to be fed to said hydraulic servo (C-1), according to the preset characteristics when the vehicle is to be started.

3. A control system for an automatic transmission according to claim 2, wherein said preset value is set on the basis of the delay in the rise of the oil pressure to be fed to the hydraulic servo (C-1).

4. A control system according to claim 1, 2 or 3, wherein said correction means (104) corrects said preset characteristics on the basis of the result of the comparison between the average of a plurality of RPM change rates detected by said change rate detecting means (103) and said reference RPM change rate.

5. A system according to any of claims 1 to 4, wherein said correction means (104) corrects said preset characteristics so that the RPM change rate, as detected by said change rate detecting means (103), may gradually approach said reference RPM change rate.

6. A system according to any of claims 1 to 5, wherein said change rate detecting means (103) detects said RPM change rate only when an oil temperature is within a preset range.

7. A system according to any of claims 1 to 6, wherein said change rate detecting means (103) detects said RPM change rate only when the engagement of said clutch (C1) is started from the substantially released state.

8. A system according to any of claims 1 to 7, wherein said change rate detecting means (103) detects said RPM change rate only when the RPM of said engine (10) is within a preset range.

9. A system according to any of claims 1 to 8, wherein the minimum of the output RPM in said present section is set on the basis of the detection limit of said output RPM detecting means (47).

**Patentansprüche**

1. Steuerungssystem für ein Automatikgetriebe mit:

    einer mit einem Motor (10) verbundenen Fluidkraftübertragungseinheit (12);
    einer Kupplung (C1), die dazu geeignet ist, eingerückt zu werden, wenn ein Vorwärtsfahrbereich ausgewählt wird, um die Drehbewegung der Fluidkraftübertragungseinheit (12) zu einer Gangschalteinheit (16) zu übertragen;
    einer Hydraulik-Servoeinrichtung (C-1) zum Einrücken der Kupplung (C1), wenn ihr ein Öldruck zugeführt wird;
    einer Ausgangsdrehzahlerfassungseinrichtung (47) zum Erfassen der Ausgangsdrehzahl der Fluidkraftübertragungseinheit (12);
    einer Öldruckerzeugungseinrichtung (40) zum Erzeugen des der Hydraulik-Servoeinrichtung (C-1) zuzuführenden Öldrucks; und
    eine Steuereinheit (41);

    wobei die Steuereinheit (41) aufweist:

    eine Verstärkereinrichtung (105) zum Erhöhen des Öldrucks gemäß vorgegebenen Kennlinien; und
    eine Korrektureinrichtung (104) zum Korrigieren der vorgegebenen Kennlinien für den nächsten Einrückvorgang der Kupplung (C1) auf der Basis eines Vergleichsergebnisses; **gekennzeichnet durch**
    eine Änderungsratenerfassungseinrichtung (103) zum Erfassen der Drehzahländerungsrate der Ausgangsdrehzahl in einem vorgegebenen Bereich der Ausgangsdrehzahl während des Einrückvorgangs der Kupplung **durch** die Verstärkereinrichtung (105);

    wobei die Korrektureinrichtung (104) die **durch** die Änderungsratenerfassungseinrichtung (103) erfaßte Drehzahländerungsrate mit einem Drehzahländerungsraten-Referenzwert vergleicht; und
    wobei die Änderungsratenerfassungseinrichtung (103) die Drehzahländerungsrate nur dann erfaßt, wenn die Ausgangsdrehzahl zum Zeitpunkt des Beginns des Einrückvorgangs der ersten Kupplung (C1) im vorgegebenen Bereich um einen vorgegebenen Wert höher ist als der Maximalwert der Ausgangsdrehzahl.

2. Steuerungssystem nach Anspruch 1, wobei die Verstärkereinrichtung (105) den der Hydraulik-Servoeinrichtung (C-1) zuzuführenden Öldruck vermindert, um die Kupplung (C1) im wesentlichen freizugeben, wenn das Fahrzeug angehalten hat, während der Vorwärtsfahrbereich ausgewählt ist, und den der Hydraulik-Servoeinrichtung (C-1) zuzuführenden Öldruck gemäß den vorgegebenen Kennlinien erhöht, wenn das Fahrzeug in Bewegung gesetzt werden soll.

3. Steuerungssystem nach Anspruch 2, wobei der vorgegebene Wert auf der Basis der Verzögerung im Anstieg des der Hydraulik-Servoeinrichtung (C-1) zuzuführenden Öldrucks gesetzt wird.

4. Steuerungssystem nach einem der Ansprüche 1, 2 oder 3, wobei die Korrektureinrichtung (104) die vorgegebenen Kennlinien auf der Basis des Ergebnisses des Vergleichs zwischen dem Mittelwert mehrerer durch die Änderungsratenerfassungseinrichtung (103) erfaßter Drehzahländerungsraten und dem Drehzahländerungraten-Referenzwert korrigiert.

5. Steuerungssystem nach einem der Ansprüche 1 bis 4, wobei die Korrektureinrichtung (104) die vorgegebenen Kennlinien so korrigiert, daß die durch die Änderungsratenerfassungseinrichtung (103) erfaßte Drehzahländerungsrate sich dem Drehzahländerungraten-Referenzwert graduell annähern kann.

6. Steuerungssystem nach einem der Ansprüche 1 bis 5, wobei die Änderungsratenerfassungseinrichtung (103) die Drehzahländerungsrate nur dann erfaßt, wenn eine Öltemperatur innerhalb eines vorgegebenen Bereichs liegt.

7. Steuerungssystem nach einem der Ansprüche 1 bis 6, wobei die Änderungsratenerfassungseinrichtung (103) die Drehzahländerungsrate nur dann erfaßt, wenn der Einrückvorgang der Kupplung (C1) von dem im wesentlichen freigegebenen Zustand ausgehend beginnt.

8. Steuerungssystem nach einem der Ansprüche 1 bis 7, wobei die Änderungsratenerfassungseinrichtung (103) die Drehzahländerungsrate nur dann erfaßt, wenn die Drehzahl des Motors (10) innerhalb eines vorgegebenen Bereichs liegt.

9. Steuerungssystem nach einem der Ansprüche 1 bis 8, wobei der Minimalwert der Ausgangsdrehzal im vorgegebenen Bereich auf der Basis des Erfassungsgrenzwertes der Ausgangsdrehzahlerfassungseinrichtung (47) gesetzt wird.

## Revendications

1. Système de commande pour transmission automatique, comprenant : un module de transmission de fluide (12) connecté à un moteur (10); un embrayage (C1) adapté pour être appliqué lorsqu'un rapport de marche avant est sélectionné, pour transmettre la rotation dudit module de transmission de fluide (12) à un module de changement de vitesse (16) ; un servomécanisme hydraulique (C-1) qui sert à appliquer ledit embrayage (C1) lorsqu'on lui transmet une pression d'huile ; un moyen de détection de vitesse de rotation de sortie (47) pour détecter la vitesse de rotation de sortie dudit module de transmission de fluide (12) ; un moyen de génération de pression d'huile (40) pour produire la pression d'huile à transmettre audit servomécanisme hydraulique (C-1); et un module de commande (41),

   dans lequel ledit module de commande (41) comprend: un moyen d'appoint (105) pour augmenter ladite pression d'huile en fonction de caractéristiques préétablies ; un moyen de correction (104) pour corriger lesdites caractéristiques préétablies pour l'application suivante de l'embrayage (C1) en fonction d'un résultat de comparaison;

   **caractérisé par**

   un moyen de détection de taux de variation (103) pour détecter le taux de variation de vitesse de rotation de la vitesse de rotation de sortie dans une section préétablie de la vitesse de rotation de sortie pendant l'application dudit embrayage par le moyen d'appoint (105); ledit moyen de correction (104) comparant le taux de variation de vitesse de rotation, tel que détecté par ledit moyen de détection de taux de variation (103), avec un taux de variation de vitesse de rotation de référence, et

   dans lequel ledit moyen de détection de taux de variation (103) ne détecte ledit taux de variation de vitesse de rotation que lorsque la vitesse de rotation de sortie, au moment de commencer la mise en prise dudit embrayage (C1), est supérieure d'une valeur préétablie au maximum de la vitesse de rotation de sortie dans ladite section préétablie.

2. Système de commande pour transmission automatique selon la revendication 1, dans lequel ledit moyen d'appoint (105) réduit la pression d'huile à transmettre audit servomécanisme hydraulique (C-1) pour relâcher de ce fait ledit embrayage (C1) substantiellement lorsque le véhicule est arrêté alors que le rapport de marche avant est sélectionné, et augmente la pression d'huile à transmettre audit servomécanisme hydraulique (C-1), en fonction des caractéristiques préétablies, lorsque le véhicule doit démarrer.

3. Système de commande pour transmission automatique selon la revendication 2, dans lequel ladite valeur préétablie est établie en fonction du retard de l'augmentation de la pression d'huile à transmettre au servomécanisme hydraulique (C-1).

4. Système de commande pour transmission automatique selon la revendication 1, 2 ou 3, dans lequel ledit moyen de correction (104) corrige lesdites caractéristiques préétablies en fonction du résultat de la comparaison entre la moyenne d'une pluralité de taux de variation de vitesse de rotation détectés par ledit moyen de détection de taux de variation (103) et ledit taux de variation de vitesse de rotation de référence.

5. Système de commande pour transmission automatique selon l'une quelconque des revendications 1 à 4, dans lequel ledit moyen de correction (104) corrige lesdites caractéristiques préétablies de telle manière que le taux de variation de vitesse de rotation détecté par ledit moyen de détection de taux de variation (103) approche progressivement ledit taux de variation de vitesse de rotation de référence.

6. Système de commande pour transmission automatique selon l'une quelconque des revendications 1 à 5, dans lequel ledit moyen de détection de taux de variation (103) ne détecte ledit taux de variation de vitesse de rotation que lorsqu'une température d'huile se trouve dans une plage préétablie.

7. Système de commande pour transmission automatique selon l'une quelconque des revendications 1 à 6, dans lequel ledit moyen de détection de taux de variation (103) ne détecte ledit taux de variation de vitesse de rotation que lorsque la mise en prise dudit embrayage (C1) commence en partant de l'état substantiellement relâché.

8. Système de commande pour transmission automatique selon l'une quelconque des revendications 1 à 7, dans lequel ledit moyen de détection de taux de variation (103) ne détecte ledit taux de variation de vitesse de rotation que lorsque la vitesse de rotation dudit moteur (10) se trouve dans une plage préétablie.

9. Système de commande pour transmission automatique selon l'une quelconque des revendications 1 à 8, dans lequel la vitesse de rotation de sortie minimum dans ladite section préétablie est établie en fonction de la limite de détection dudit moyen de détection de vitesse de rotation de sortie (47).

# FIG. 1

C 1

C−1

Hydraulic Control Unit ～40

Booster Means ～105

Correction Means ～104

Change Rate Detecting Means ～103

EP 0 790 441 B1

# FIG. 2

# FIG. 3

| | | Solenoid | | | Clutch | | | Brake | | | | One-Way Clutch | | |
|---|---|---|---|---|---|---|---|---|---|---|---|---|---|---|
| | | S1 | S2 | S3 | C1 | C2 | C3 | B1 | B2 | B3 | B4 | F1 | F2 | F3 |
| R | | × | ○ | × | × | ○ | × | × | × | ○ | ○ | × | × | × |
| N | | × | ○ | × | × | × | × | × | × | × | ○ | × | × | × |
| D | 1 ST | × | ○ | △ | ○ | × | × | × | × | (○) | ○ | × | ○ | ○ |
| | 2 ND | ○ | ○ | △ | ○ | × | × | ○ | ○ | × | ○ | ○ | × | ○ |
| | 3 RD | ○ | × | × | ○ | × | ○ | ○ | ○ | × | × | ○ | × | × |
| | 4 TH | × | × | × | ○ | ○ | ○ | × | ○ | × | × | × | × | × |

# FIG. 4

# FIG. 5

# FIG. 6

```
        ┌─────────────────┐
        │      START      │
        └─────────────────┘
                 │
    ┌──────────────────────────────┐
    │  First Clutch Release Control │   S1
    └──────────────────────────────┘
                 │
    ┌──────────────────────────────┐
    │      In-Neutral Control       │   S2
    └──────────────────────────────┘
                 │
    ┌──────────────────────────────┐
    │ First Clutch Application Control │  S3
    └──────────────────────────────┘
                 │
        ┌─────────────────┐
        │       END       │
        └─────────────────┘
```

# FIG. 7

# FIG. 8

FIRST CLUTCH RELEASE
CONTROL SUB-ROUTINE START

Zero Vehicle Speed Estimation | S1-1

S1-2
Starting Condition
Satisfied ? — N

Y

S1-3 N
Time T₁
Elapsed ?

Y

Output 2nd Speed Shift | S1-4

Third Solenoid Signal ON | S1-5

Detect Engine RPM | S1-6

Output C-1 Oil Pressure
corresponding to Engine RPM | S1-7

( 4 )

# FIG. 9

Flowchart:

④

Detect Engine RPM — S1-8

Engine RPM Changed ? — S1-9

Y → Output C-1 Oil Pressure corresponding to Reference Engine RPM — S1-10

N

S1-11
Sweep down C-1 Oil Pressure

$e > e_1$ ? — S1-12

N (back to Detect Engine RPM loop)

Y

END

# FIG. 10

Input Torque $T_T$ / C-1 Oil Pressure $P_{C1}$ vs Engine RPM $N_E$. Curves labeled $T_T$ and $P_{TH}$.

# FIG. 11

ZERO VEHICLE SPEED ESTIMATION SUB-ROUTINE START

$\triangle N_{C1\,(i)} = N_{C1\,(i)} - N_{C1\,(i-1)}$   S 1-1-1

$A = \triangle N_{C1\,(i)} / \triangle t$   S 1-1-2

$T_1 = N_{C1\,(i)} / A$   S 1-1-3

END

# *FIG. 12*

Stroke End Position

Drag Region ┊ Slip Region

Torque $T_q$  Rotational Difference $\triangle N$

$T_q$

$\triangle N$

C-1 Oil Pressure $P_{C1}$

# FIG. 13

# FIG. 14

# FIG. 15

```
        ┌─────────────────────────┐
        │   IN-NEUTRAL CONTROL    │
        │   SUB-ROUTINE START     │
        └─────────────────────────┘
                     │
              ┌──────────────┐
              │  Initialize  │  S2-1
              └──────────────┘
                     │
         ┌───────────┤
         │  ┌──────────────────────┐
         │  │  Hold C-1 Oil Pressure │  S2-2
         │  └──────────────────────┘
         │           │
         │      ╱────────────╲
    N    │     ╱ Time T₂ Elapsed? ╲  S2-3
         └────╲              ╱
              ╲────────────╱
                     │ Y
    (5)──────────────┤
              ┌──────────────────────┐
              │  △N ← NE − NC1       │  S2-4
              └──────────────────────┘
                     │
       Y        ╱────────────╲
  (6)◄─────────╱ Sampling Time? ╲  S2-5
              ╲              ╱
              ╲────────────╱
                     │ N
        ┌────────────────────────────┐
        │  Update of Threshold Value │  S2-11
        └────────────────────────────┘
                     │
                ╱──────────╲         S2-12
               ╱  F = ON ?  ╲──────────┐
               ╲           ╱   N       │
               ╲──────────╱            │
                     │ Y               │
                ╱──────────╲    S2-13  │
               ╱ δ ≦ △NRi ? ╲─────────►│
               ╲           ╱   N       │
               ╲──────────╱            │
                     │ Y               │
        ┌────────────────────────────┐ │
        │  Lower Pressure by Deciding │ │
        │  First Clutch in Slip Region, │  S2-14
        │  and Reset Sampling Time   │ │
        └────────────────────────────┘ │
                     │                  │
   ┌──────────────────────────────────┐ │
   │ PC1m ← PC1 before Pressure Reduction │  S2-15
   └──────────────────────────────────┘ │
                     │◄─────────────────┘
                    (7)
```

# FIG. 16

⑥

S2-6

$|\delta| \leqq \triangle N_{RC}$ ?  — N

Y

S2-7

$C < C_R$ ?  — N

Y

S2-8

Raise Pressure by
Deciding First Clutch
in Drag Region

Lower Pressure by
Deciding First Clutch
in Slip Region — S2-9

S2-10

$P_{C1m} \leftarrow P_{C1}$ before
Pressure Reduction

⑦

S2-16

N
⑤ ← Ending Condition
Satisfied ?

Y

END

# FIG. 17

THRESHOLD VALUE UPDATING
SUB-ROUTINE START

$T_{SAM} < T_{S1}$ ? — S2-11-1

Y

$\triangle N_{Ri} \leftarrow \triangle N_{RA}$ — S2-11-2

N

$T_{SAM} < T_{S2}$ ? — S2-11-3

Y

$\triangle N_{Ri} \leftarrow \triangle N_{RB}$ — S2-11-4

N

$\triangle N_{Ri} \leftarrow \triangle N_{RC}$ — S2-11-5

END

# FIG. 18

```
┌─────────────────────────────────┐
│   FIRST CLUTCH APPLICATION       │
│   CONTROL SUB-ROUTINE START      │
└─────────────────────────────────┘
                 │
        ┌────────────────┐
        │  N (1) ← Nc1   │  S3-1
        └────────────────┘
                 │
      ┌─────────────────────┐
      │  Pc1 ← Pc1m + Pc1s  │  S3-2
      └─────────────────────┘
                 │
                 ✕──────────────────── (9)
                 │
   N    ◇─────────────────────◇  S3-3
   ◄────│  Nc1 < N(1) − DSN ? │
        ◇─────────────────────◇
                 │ Y
   Y      ◇──────────────◇  S3-4
   ◄──────│  1st Speed ?  │
          ◇──────────────◇
                 │ N
        ┌──────────────────────┐
        │ Output 1st Speed Shift│  S3-5
        └──────────────────────┘
                 │
      ┌──────────────────────────┐
      │ Sweep up C-1 Oil Pressure │  S3-6
      └──────────────────────────┘
                 │
                (8)
```

# FIG. 19

⑧

S3-7 Time $T_3$ Elapsed ? — Y

N

S3-8 $N_{C1}$ < DEN ? — N

Y

S3-9 Time $T_4$ Elapsed ? — N

Y

| Third Solenoid Signal OFF | S3-10 |

⑨

| Engagement Pressure Learning Control | S3-11 |

END

# FIG. 20

Constant $P_{C1S}$

Throttle Opening $\theta$

# FIG. 21

Detection Delay

0            500

Clutch Input Side RPM $N_{C1}$ (rpm)

# FIG. 22

Release Stared

$P_{C1}$

$N_{C1}$

$n_{CU}$        1    2    3    4

# FIG. 23

ENGAGEMENT PRESSURE LEARNING
CONTROL SUB-ROUTINE START

N — $OT \geqq OT1$ ? — S3-11-1
Y

N — $OT < OT2$ ? — S3-11-2
Y

N — $N_{ES} \geqq N_{E1}$ ? — S3-11-3
Y

N — $N_{ES} < N_{E2}$ ? — S3-11-4
Y

N — $N_{C1S} \geqq N_{C1A} + \alpha$ ? — S3-11-5
Y

N — $n_{CU} \geqq F_{CU}$ ? — S3-11-6
Y

$$DN_i = \frac{N_{C1A} - N_{C1B}}{\tau}$$

S3-11-7

(11)  (10)

# FIG. 24

⑩

S3-11-8

$i \geqq i_{max}$ ? — N

Y

$$DN_{AV} = \sum_{n=1}^{i_{max}} DN_n \diagup i_{max}$$

S3-11-10

$i = 1$    S3-11-11

S3-11-9

$i = i + 1$

S3-11-12    N

$DN_{AV} \geqq DN_A$ ?

S3-11-13    Y

$P_{C1S} = P_{C1S} - DPL$

S3-11-14    N

$DN_{AV} < DN_B$ ?

Y    S3-11-15

$P_{C1S} = P_{C1S} + DPL$

⑪

END

38

# FIG. 25

Application Started

$N_{ES}$

t 8    t 9

$N_E$

$N_{C-1}$

$N_{C1}$

$N_{C1A}$

$N_{C1B}$

# FIG. 26

Application Started

$N_{C1}$    $N_{C1S}$

$N_{C1A}$

$N_{C1B}$